(19) Europäisches Patentamt
European Patent Office
Office européen des brevets

(11) **EP 2 423 436 B1**

(12) **EUROPEAN PATENT SPECIFICATION**

(45) Date of publication and mention
of the grant of the patent:
**01.06.2016 Bulletin 2016/22**

(51) Int Cl.:
**F01D 5/14** (2006.01)          **F04D 29/32** (2006.01)

(21) Application number: **11178245.4**

(22) Date of filing: **22.08.2011**

(54) **Airfoil shape for compressor**

Turbinenschaufelprofil für Kompressoren

Forme de profil d'aube pour compresseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2010 IT CO20100045**

(43) Date of publication of application:
**29.02.2012 Bulletin 2012/09**

(73) Proprietor: **Nuovo Pignone S.p.A.**
**50127 Florence (IT)**

(72) Inventors:
• **Lanese, Nicola**
 **50127 Firenze (IT)**
• **Lorusso, Salvatore**
 **50127 Firenze (IT)**
• **Arinci, Paolo**
 **50127 Firenze (IT)**
• **Grimaldi, Antonio Maria**
 **50127 Firenze (IT)**

(74) Representative: **Illingworth-Law, William Illingworth**
 **GPO Europe**
 **GE International Inc.**
 **The Ark**
 **201 Talgarth Road**
 **Hammersmith**
 **London W6 8BJ (GB)**

(56) References cited:
**EP-A2- 1 754 859          US-A1- 2009 290 987**
**US-A1- 2010 040 475**

**Description**

<u>**TECHNICAL FIELD**</u>

The present invention relates generally to airfoils and, more specifically, to airfoil shapes used in compressors, e.g., as part of gas turbines.

<u>**BACKGROUND**</u>

A compressor is a machine which accelerates gas particles to, ultimately, increase the pressure of a compressible fluid, e.g., a gas, through the use of mechanical energy. Compressors are used in a number of different applications, including operating as an initial stage of a gas turbine engine. Among the various types of compressors are the so-called centrifugal compressors, in which mechanical energy operates on gas input to the compressor by way of centrifugal acceleration, e.g., by rotating a centrifugal impeller (sometimes also called a "rotor") by which the compressible fluid is passing, and axial compressors which have, as each stage, a drum having a number of annular airfoil rows (blades) attached thereto. The airfoils attached to the drum rotate between a similar number of stationary airfoil rows attached to a stationary casing. More generally, axial and centrifugal compressors can be said to be part of a class of machinery known as "turbo machines" or "turbo rotating machines".
US 2009/0290987 A1 discloses a compressor blade having an increased thickness over a portion of the airfoil span.

In a gas turbine engine, many system requirements should be met at each stage of a gas turbine's flow path section to meet design goals. These design goals include, but are not limited to, overall improved efficiency and airfoil loading capability. For example, and in no way limiting of the invention, a blade of a compressor stator should achieve thermal and mechanical operating requirements associated with the particular stage in which it is located. Similarly, and also as a purely illustrative example, a blade of a compressor rotor should also achieve thermal and mechanical operating requirements associated with the particular stage of the gas turbine in which it is located.

In particular, it would be desirable to ensure that the surfaces of such blades are shaped so that their resonance frequencies are tuned to accommodate operating characteristics of the turbo machines as a whole.

<u>**SUMMARY**</u>

The present invention is defined in the accompanying claims.

Devices, systems and methods according to exemplary embodiments provide blades, e.g., as part of a rotor or a stator associated with a turbo machine, with particular shapes to optimize operating characteristics. Among other things, blade thickness as a function of blade height can be tailored to operating characteristics of the turbo machine.

According to an exemplary embodiment, a rotor blade having a nominal surface profile substantially in accordance with Cartesian coordinates X, Y and Z as set forth in TABLE 1, and wherein X and Y are distances in millimeters which, when connected by smooth, continuing arcs, define airfoil profile sections at each distance Z in millimeters, the airfoil profile sections at the Z distances being joined smoothly with one another to form a complete airfoil shape.

According to another exemplary embodiment, a rotor blade includes a platform, a root portion of the rotor blade connected to the platform, and a blade surface ending in a tip portion, the blade surface having a cross-sectional airfoil shape, wherein a thickness of the rotor blade varies as a function of rotor blade height in accordance with three different linear functions.

According to yet another exemplary embodiment, a turbo machine includes a drive shaft, at least one rotor wheel, a plurality of circumferentially spaced rotor blades mounted on the rotor wheel, a stator, and a plurality of circumferentially spaced stator blades attached to the stator wherein at least one of the plurality of rotor blades and plurality of stator blades further includes: a platform, a root portion of the at least one of the plurality of rotor blades and plurality of stator blades connected to the platform, and a blade surface ending in a tip portion, the blade surface having a cross-sectional airfoil shape, wherein a thickness of the at least one of the plurality of rotor blades and plurality of stator blades varies as a function of blade height in accordance with three different linear functions.

**BRIEF DESCRIPTION OF THE DRAWINGS**

The accompanying drawings illustrate exemplary embodiments, wherein:

Figures 1 depicts an exemplary axial compressor in which blade shapes according to exemplary embodiments can be implemented;
Figures 2 shows a suction side of a rotor blade according to an exemplary embodiment;
Figure 3 shows a pressure side of a rotor blade according to an exemplary embodiment;

Figure 4 illustrates aspects associated with a coordinate system used to define a loci of points according to an exemplary embodiment; and

Figure 5 is a graph depicting blade thickness as a function of blade height according to an exemplary embodiment.

## DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

To provide some context for the subsequent discussion relating to airfoil shapes according to the exemplary embodiments, a brief discussion associated with axial compressors is first provided. In an axial compressor, rotor blades impart kinetic energy to the air flow and therefore bring about a desired pressure rise across the compressor. Directly following the rotor airfoils is a stage of stator airfoils. Both the rotor and stator airfoils turn the airflow, slow the airflow velocity (in the respective airfoil frame of reference), and yield a rise in the static pressure of the airflow.

The configuration of the airfoils (along with their interaction with surrounding airfoils), including, for example, their peripheral surface (profile) determines stage airflow efficiency, aeromechanics, smooth laminar flow from stage to stage, reduced thermal stresses, enhanced interrelation of the stages to effectively pass the airflow from stage to stage, and reduced mechanical stresses, among other desirable aspects of these exemplary embodiments. Typically, multiple rows of rotor/stator stages are stacked in axial flow compressors to achieve a desired discharge to inlet pressure ratio. Rotor and stator airfoils can be secured to rotor wheels or stator case by an appropriate attachment configuration, often known as a "root", "base" or "dovetail", examples of which are described below.

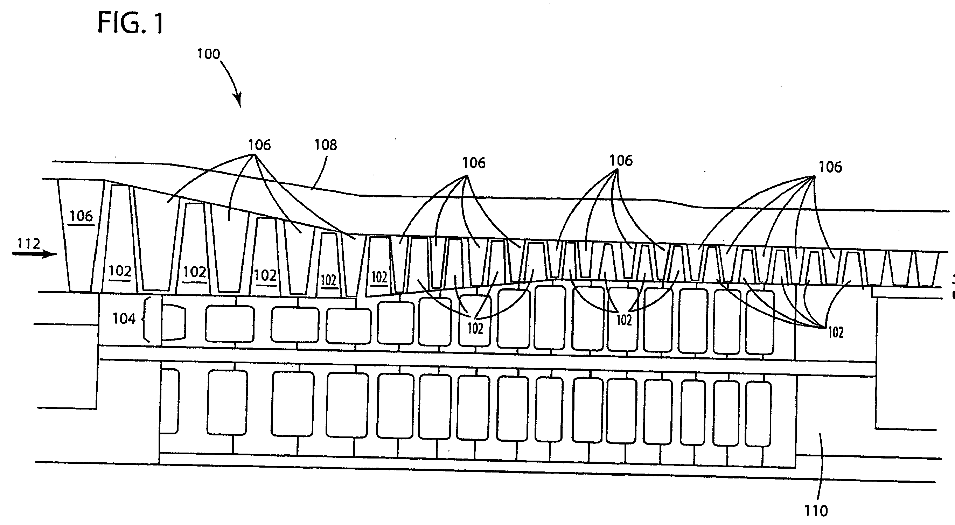

Figure 1 illustrates an exemplary axial compressor 100, e.g., associated with a gas turbine compressor. As mentioned above, an axial compressor typically includes a plurality of compressor stages, for example seventeen or eighteen stages, however those skilled in the art will appreciate that axial compressors according to exemplary embodiments may include any number of rotor stages and stator stages. The stage 100 of the axial compressor illustrated in Figure 1 includes a plurality of circumferentially spaced rotor blades 102 mounted on a rotor wheel or drum 104 and a plurality of circumferentially spaced stator blades 106 attached to a static compressor case 108.

Each of the rotor wheels 104 is attached to aft drive shaft 110, which is connected to the turbine section (not shown) of the engine. The rotor blades 102 and stator blades 106 are disposed in the flow path of the axial compressor. The direction of airflow along the flow path, in this exemplary axial compressor, is indicated by the arrow 112. It will be appreciated that this stage 100 of an axial compressor is merely exemplary of the various stages of an axial compressor and that the illustrated and described stage 100 of the axial compressor is not intended to limit the invention in any manner.

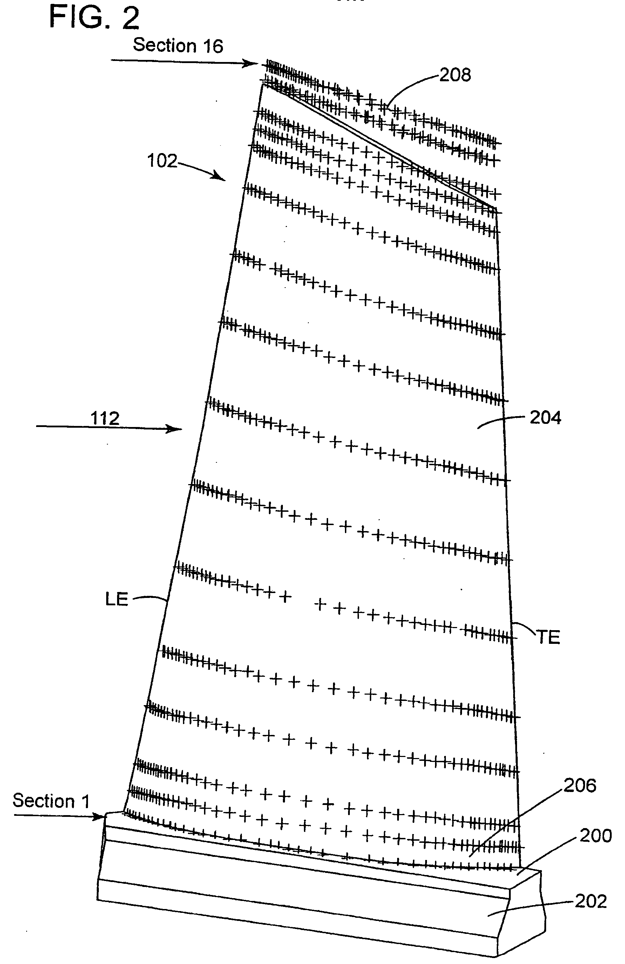

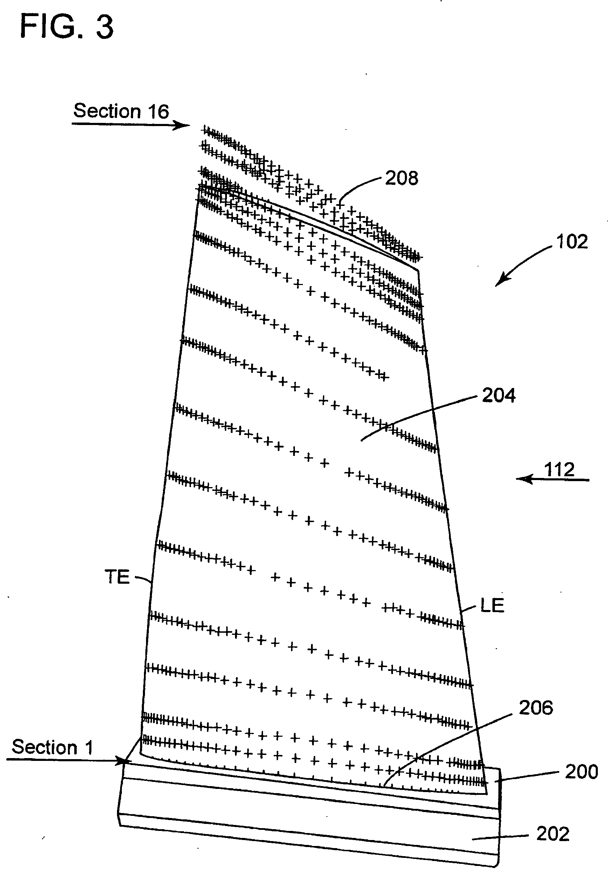

Rotor blades 102 according to exemplary embodiments are illustrated in more detail in Figures 2 and 3 which show opposite sides of a rotor blade 102. In particular, but without limiting the present invention, such rotor blades 102 according to these exemplary embodiments can be used in the first stage of axial compressors like that shown in Figure 1, i.e., in the stage closest to the inlet associated with the process flow. Specifically, Figure 2 depicts the suction side of a rotor blade 102 according to an exemplary embodiment, while Figure 3 depicts the pressure side of the same rotor blade 102 having a leading edge (LE) and trailing edge (TE) as shown relative to the compressor flow path 112. Each rotor blade 102 can, for example, be provided with a platform 200, and a substantially axial (or near axial) entry dovetail 202 for connection with a complementary-shaped mating dovetail (not shown) on the rotor wheel 104. Additionally, each rotor blade 102 includes a rotor blade airfoil 204 having a profile at any cross-section thereof, i.e., from the airfoil root 206 to the rotor blade tip 208 in the general shape of an airfoil, as will be discussed in more detail below.

To define the airfoil shape of the rotor blade airfoil 204 according to exemplary embodiments, a set or loci of points in space are provided in Table 1 below. It can be seen that the exemplary rotor blade 102 in Figures 2 and 3 have sixteen section lines, although those skilled in the art will recognize that any number of sections could be defined. This set or loci of points is intended to meet the section requirements associated with the section or sections in which rotor blades 102 are to be used so that the section can be manufactured. This loci of points is also intended to meet the desired specifications for stage efficiency and reduced thermal and mechanical stresses. The loci of points are arrived at by simulations, iterating between aerodynamic and mechanical loadings and enabling compressors designed in accordance with exemplary embodiments to run in an efficient, safe and smooth manner.

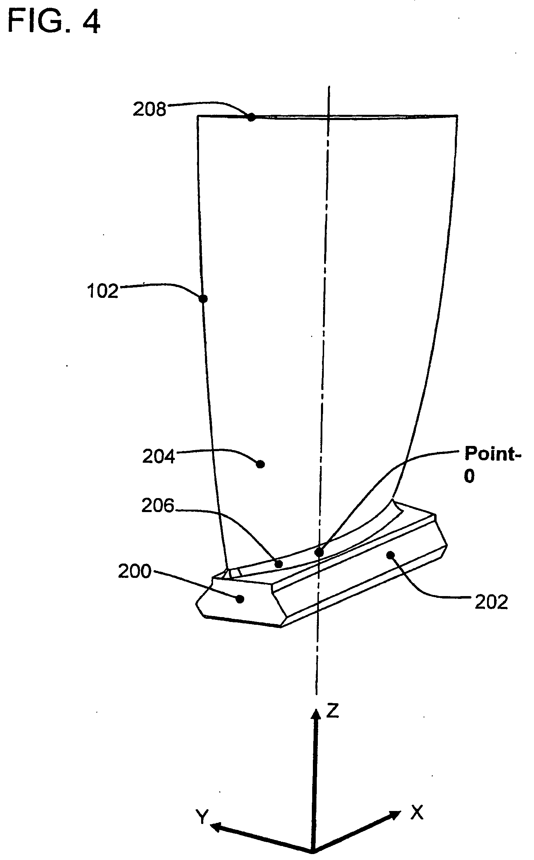

More specifically, the loci defines the rotor blade airfoil profile according to exemplary embodiments and can include a set of points which are defined relative to an axis of rotation of the engine. For example, a Cartesian coordinate system of X, Y and Z values can be defined and used to reference the points in the loci. The Cartesian coordinate system has orthogonally-related X, Y and Z axes. According to this exemplary embodiment, the X axis lies parallel to the engine's centerline, as illustrated in Figure 4. A positive X coordinate value is thus axial toward the aft, for example toward the exhaust end of the axial compressor. A positive Y coordinate value is directed circumferentially following engine counterclockwise direction of rotation. A positive Z coordinate value is directed radially outward toward tip of the airfoil 204, i.e., in the direction towards the static casing 108 of the compressor. For reference purposes only, there is established a Point-0 passing through the intersection of the airfoil 204 and the platform 200 along the stacking axis, as illustrated in Figure 4. In the exemplary embodiment of the airfoil according to these exemplary embodiments, the Point-0 is defined as the reference section where the Z coordinate of the Table 1 below is at 416.97 millimeters, which is a set predetermined distance from the engine or rotor centerline.

The Table 1 of points which define the rotor blade 102's surface according to exemplary embodiments is provided below.

## TABLE 1

## SECTION 1    Z = 416.97

| X | Y | Z | X | Y | Z | X | Y | Z |
|---|---|---|---|---|---|---|---|---|
| -57.80 | 23.85 | 416.97 | 50.04 | -3.40 | 416.97 | -48.32 | 14.12 | 416.97 |
| -57.69 | 24.01 | 416.97 | 51.52 | -3.76 | 416.97 | -46.90 | 13.01 | 416.97 |
| -57.60 | 24.09 | 416.97 | 52.84 | -4.09 | 416.97 | -45.29 | 11.77 | 416.97 |
| -57.49 | 24.16 | 416.97 | 54.01 | -4.37 | 416.97 | -43.45 | 10.41 | 416.97 |
| -57.36 | 24.23 | 416.97 | 55.06 | -4.63 | 416.97 | -41.36 | 8.93 | 416.97 |
| -57.20 | 24.28 | 416.97 | 55.99 | -4.86 | 416.97 | -38.97 | 7.31 | 416.97 |
| -57.01 | 24.32 | 416.97 | 56.81 | -5.06 | 416.97 | -36.25 | 5.56 | 416.97 |
| -56.80 | 24.35 | 416.97 | 57.55 | -5.24 | 416.97 | -33.14 | 3.67 | 416.97 |
| -56.57 | 24.35 | 416.97 | 58.20 | -5.40 | 416.97 | -29.58 | 1.66 | 416.97 |
| -56.30 | 24.33 | 416.97 | 58.79 | -5.54 | 416.97 | -25.50 | -0.45 | 416.97 |
| -56.00 | 24.28 | 416.97 | 59.31 | -5.66 | 416.97 | -20.82 | -2.64 | 416.97 |
| -55.68 | 24.20 | 416.97 | 59.77 | -5.78 | 416.97 | -15.46 | -4.85 | 416.97 |
| -55.31 | 24.10 | 416.97 | 60.18 | -5.88 | 416.97 | -9.32 | -7.03 | 416.97 |
| -54.91 | 23.97 | 416.97 | 60.54 | -5.97 | 416.97 | -2.29 | -9.08 | 416.97 |
| -54.46 | 23.83 | 416.97 | 60.87 | -6.04 | 416.97 | 4.86 | -10.70 | 416.97 |
| -53.94 | 23.67 | 416.97 | 61.16 | -6.12 | 416.97 | 11.30 | -11.79 | 416.97 |
| -53.36 | 23.51 | 416.97 | 61.41 | -6.19 | 416.97 | 17.07 | -12.46 | 416.97 |
| -52.71 | 23.34 | 416.97 | 61.63 | -6.30 | 416.97 | 22.22 | -12.84 | 416.97 |
| -51.98 | 23.15 | 416.97 | 61.79 | -6.43 | 416.97 | 26.82 | -12.99 | 416.97 |
| -51.15 | 22.95 | 416.97 | 61.92 | -6.57 | 416.97 | 30.91 | -12.98 | 416.97 |
| -50.22 | 22.70 | 416.97 | 62.02 | -6.70 | 416.97 | 34.56 | -12.85 | 416.97 |
| -49.18 | 22.43 | 416.97 | 62.08 | -6.84 | 416.97 | 37.79 | -12.65 | 416.97 |
| -48.02 | 22.11 | 416.97 | 62.12 | -6.96 | 416.97 | 40.67 | -12.39 | 416.97 |
| -46.70 | 21.76 | 416.97 | 62.15 | -7.08 | 416.97 | 43.22 | -12.11 | 416.97 |
| -45.23 | 21.36 | 416.97 | 62.16 | -7.18 | 416.97 | 45.49 | -11.82 | 416.97 |
| -43.58 | 20.91 | 416.97 | 62.18 | -7.36 | 416.97 | 47.50 | -11.51 | 416.97 |
| -41.71 | 20.41 | 416.97 | -57.87 | 23.68 | 416.97 | 49.29 | -11.22 | 416.97 |
| -39.62 | 19.86 | 416.97 | -57.90 | 23.57 | 416.97 | 50.88 | -10.93 | 416.97 |
| -37.27 | 19.23 | 416.97 | -57.90 | 23.45 | 416.97 | 52.28 | -10.66 | 416.97 |
| -34.63 | 18.52 | 416.97 | -57.90 | 23.31 | 416.97 | 53.53 | -10.40 | 416.97 |

4

| | | | | | | | | |
|---|---|---|---|---|---|---|---|---|
| -31.66 | 17.73 | 416.97 | -57.87 | 23.15 | 416.97 | 54.65 | -10.17 | 416.97 |
| -28.33 | 16.83 | 416.97 | -57.82 | 22.98 | 416.97 | 55.63 | -9.94 | 416.97 |
| -24.58 | 15.83 | 416.97 | -57.74 | 22.80 | 416.97 | 56.51 | -9.74 | 416.97 |
| -20.38 | 14.70 | 416.97 | -57.64 | 22.60 | 416.97 | 57.29 | -9.55 | 416.97 |
| -15.64 | 13.44 | 416.97 | -57.50 | 22.39 | 416.97 | 57.98 | -9.38 | 416.97 |
| -10.33 | 12.04 | 416.97 | -57.33 | 22.17 | 416.97 | 58.59 | -9.22 | 416.97 |
| -4.35 | 10.47 | 416.97 | -57.12 | 21.94 | 416.97 | 59.14 | -9.08 | 416.97 |
| 2.37 | 8.73 | 416.97 | -56.87 | 21.69 | 416.97 | 59.63 | -8.96 | 416.97 |
| 9.09 | 6.99 | 416.97 | -56.58 | 21.42 | 416.97 | 60.06 | -8.84 | 416.97 |
| 15.06 | 5.45 | 416.97 | -56.24 | 21.12 | 416.97 | 60.44 | -8.73 | 416.97 |
| 20.38 | 4.08 | 416.97 | -55.87 | 20.78 | 416.97 | 60.78 | -8.64 | 416.97 |
| 25.12 | 2.87 | 416.97 | -55.46 | 20.40 | 416.97 | 61.09 | -8.56 | 416.97 |
| 29.34 | 1.80 | 416.97 | -55.00 | 19.96 | 416.97 | 61.36 | -8.48 | 416.97 |
| 33.09 | 0.85 | 416.97 | -54.48 | 19.47 | 416.97 | 61.59 | -8.38 | 416.97 |
| 36.43 | 0.01 | 416.97 | -53.91 | 18.92 | 416.97 | 61.76 | -8.24 | 416.97 |
| 39.41 | -0.74 | 416.97 | -53.25 | 18.30 | 416.97 | 61.90 | -8.10 | 416.97 |
| 42.06 | -1.41 | 416.97 | -52.50 | 17.63 | 416.97 | 62.00 | -7.96 | 416.97 |
| 44.41 | -2.00 | 416.97 | -51.64 | 16.88 | 416.97 | 62.08 | -7.82 | 416.97 |
| 46.51 | -2.52 | 416.97 | -50.68 | 16.05 | 416.97 | 62.13 | -7.69 | 416.97 |
| 48.38 | -2.98 | 416.97 | -49.58 | 15.13 | 416.97 | 62.16 | -7.57 | 416.97 |

## SECTION 2    Z = 424.59

| X | Y | Z | X | Y | Z | X | Y | Z |
|---|---|---|---|---|---|---|---|---|
| -57.02 | 25.55 | 424.59 | 49.80 | -5.42 | 424.59 | -47.75 | 15.67 | 424.59 |
| -56.90 | 25.70 | 424.59 | 51.27 | -5.84 | 424.59 | -46.35 | 14.53 | 424.59 |
| -56.81 | 25.78 | 424.59 | 52.57 | -6.21 | 424.59 | -44.78 | 13.26 | 424.59 |
| -56.70 | 25.85 | 424.59 | 53.73 | -6.54 | 424.59 | -42.98 | 11.86 | 424.59 |
| -56.56 | 25.91 | 424.59 | 54.77 | -6.83 | 424.59 | -40.93 | 10.33 | 424.59 |
| -56.40 | 25.96 | 424.59 | 55.69 | -7.09 | 424.59 | -38.60 | 8.66 | 424.59 |
| -56.22 | 25.99 | 424.59 | 56.51 | -7.33 | 424.59 | -35.93 | 6.85 | 424.59 |
| -56.01 | 26.01 | 424.59 | 57.24 | -7.53 | 424.59 | -32.87 | 4.89 | 424.59 |
| -55.77 | 26.00 | 424.59 | 57.88 | -7.72 | 424.59 | -29.38 | 2.80 | 424.59 |
| -55.50 | 25.97 | 424.59 | 58.46 | -7.88 | 424.59 | -25.37 | 0.58 | 424.59 |
| -55.21 | 25.90 | 424.59 | 58.98 | -8.02 | 424.59 | -20.78 | -1.73 | 424.59 |
| -54.89 | 25.81 | 424.59 | 59.43 | -8.15 | 424.59 | -15.51 | -4.10 | 424.59 |
| -54.53 | 25.70 | 424.59 | 59.84 | -8.27 | 424.59 | -9.46 | -6.47 | 424.59 |
| -54.13 | 25.56 | 424.59 | 60.20 | -8.37 | 424.59 | -2.53 | -8.75 | 424.59 |
| -53.68 | 25.40 | 424.59 | 60.53 | -8.46 | 424.59 | 4.53 | -10.62 | 424.59 |
| -53.17 | 25.23 | 424.59 | 60.81 | -8.54 | 424.59 | 10.90 | -11.94 | 424.59 |

| -52.60 | 25.05 | 424.59 |
|---|---|---|
| -51.95 | 24.86 | 424.59 |
| -51.22 | 24.65 | 424.59 |
| -50.40 | 24.41 | 424.59 |
| -49.48 | 24.14 | 424.59 |
| -48.45 | 23.83 | 424.59 |
| -47.30 | 23.48 | 424.59 |
| -46.00 | 23.08 | 424.59 |
| -44.54 | 22.63 | 424.59 |
| -42.90 | 22.13 | 424.59 |
| -41.06 | 21.57 | 424.59 |
| -38.98 | 20.94 | 424.59 |
| -36.66 | 20.24 | 424.59 |
| -34.04 | 19.45 | 424.59 |
| -31.10 | 18.55 | 424.59 |
| -27.80 | 17.55 | 424.59 |
| -24.09 | 16.42 | 424.59 |
| -19.92 | 15.15 | 424.59 |
| -15.24 | 13.73 | 424.59 |
| -9.97 | 12.15 | 424.59 |
| -4.05 | 10.38 | 424.59 |
| 2.60 | 8.40 | 424.59 |
| 9.25 | 6.43 | 424.59 |
| 15.17 | 4.68 | 424.59 |
| 20.44 | 3.13 | 424.59 |
| 25.13 | 1.75 | 424.59 |
| 29.30 | 0.53 | 424.59 |
| 33.02 | -0.56 | 424.59 |
| 36.33 | -1.52 | 424.59 |
| 39.27 | -2.38 | 424.59 |
| 41.90 | -3.14 | 424.59 |
| 44.23 | -3.81 | 424.59 |
| 46.31 | -4.41 | 424.59 |
| 48.16 | -4.94 | 424.59 |

| 61.07 | -8.62 | 424.59 |
|---|---|---|
| 61.27 | -8.73 | 424.59 |
| 61.44 | -8.86 | 424.59 |
| 61.56 | -9.01 | 424.59 |
| 61.65 | -9.15 | 424.59 |
| 61.72 | -9.28 | 424.59 |
| 61.76 | -9.41 | 424.59 |
| 61.78 | -9.52 | 424.59 |
| 61.79 | -9.63 | 424.59 |
| 61.79 | -9.80 | 424.59 |
| -57.09 | 25.38 | 424.59 |
| -57.11 | 25.27 | 424.59 |
| -57.12 | 25.15 | 424.59 |
| -57.12 | 25.01 | 424.59 |
| -57.09 | 24.85 | 424.59 |
| -57.04 | 24.68 | 424.59 |
| -56.97 | 24.50 | 424.59 |
| -56.86 | 24.30 | 424.59 |
| -56.73 | 24.09 | 424.59 |
| -56.56 | 23.87 | 424.59 |
| -56.35 | 23.63 | 424.59 |
| -56.10 | 23.38 | 424.59 |
| -55.82 | 23.11 | 424.59 |
| -55.49 | 22.81 | 424.59 |
| -55.13 | 22.46 | 424.59 |
| -54.72 | 22.07 | 424.59 |
| -54.27 | 21.63 | 424.59 |
| -53.77 | 21.13 | 424.59 |
| -53.21 | 20.57 | 424.59 |
| -52.56 | 19.94 | 424.59 |
| -51.83 | 19.26 | 424.59 |
| -50.99 | 18.49 | 424.59 |
| -50.05 | 17.64 | 424.59 |
| -48.97 | 16.71 | 424.59 |

| 16.61 | -12.84 | 424.59 |
|---|---|---|
| 21.73 | -13.41 | 424.59 |
| 26.30 | -13.75 | 424.59 |
| 30.38 | -13.91 | 424.59 |
| 34.01 | -13.95 | 424.59 |
| 37.25 | -13.89 | 424.59 |
| 40.12 | -13.76 | 424.59 |
| 42.68 | -13.60 | 424.59 |
| 44.95 | -13.41 | 424.59 |
| 46.97 | -13.20 | 424.59 |
| 48.76 | -12.99 | 424.59 |
| 50.35 | -12.79 | 424.59 |
| 51.77 | -12.58 | 424.59 |
| 53.02 | -12.39 | 424.59 |
| 54.14 | -12.20 | 424.59 |
| 55.13 | -12.03 | 424.59 |
| 56.02 | -11.87 | 424.59 |
| 56.80 | -11.72 | 424.59 |
| 57.50 | -11.58 | 424.59 |
| 58.12 | -11.46 | 424.59 |
| 58.67 | -11.35 | 424.59 |
| 59.16 | -11.24 | 424.59 |
| 59.59 | -11.15 | 424.59 |
| 59.98 | -11.07 | 424.59 |
| 60.33 | -10.99 | 424.59 |
| 60.63 | -10.92 | 424.59 |
| 60.91 | -10.86 | 424.59 |
| 61.14 | -10.77 | 424.59 |
| 61.33 | -10.66 | 424.59 |
| 61.48 | -10.52 | 424.59 |
| 61.59 | -10.39 | 424.59 |
| 61.67 | -10.25 | 424.59 |
| 61.73 | -10.13 | 424.59 |
| 61.76 | -10.01 | 424.59 |

## SECTION 3    Z = 432.21

| X | Y | Z |
|---|---|---|
| -56.22 | 27.19 | 432.21 |
| -56.09 | 27.34 | 432.21 |

| X | Y | Z |
|---|---|---|
| 49.51 | -7.39 | 432.21 |
| 50.96 | -7.87 | 432.21 |

| X | Y | Z |
|---|---|---|
| -47.14 | 17.17 | 432.21 |
| -45.78 | 16.00 | 432.21 |

| | | | | | | | | |
|---|---|---|---|---|---|---|---|---|
| -56.00 | 27.42 | 432.21 | 52.25 | -8.29 | 432.21 | -44.24 | 14.70 | 432.21 |
| -55.89 | 27.49 | 432.21 | 53.40 | -8.66 | 432.21 | -42.48 | 13.27 | 432.21 |
| -55.75 | 27.54 | 432.21 | 54.42 | -8.99 | 432.21 | -40.47 | 11.70 | 432.21 |
| -55.59 | 27.58 | 432.21 | 55.33 | -9.29 | 432.21 | -38.18 | 9.98 | 432.21 |
| -55.40 | 27.61 | 432.21 | 56.14 | -9.55 | 432.21 | -35.57 | 8.10 | 432.21 |
| -55.19 | 27.61 | 432.21 | 56.86 | -9.78 | 432.21 | -32.57 | 6.08 | 432.21 |
| -54.96 | 27.60 | 432.21 | 57.51 | -9.99 | 432.21 | -29.14 | 3.90 | 432.21 |
| -54.69 | 27.55 | 432.21 | 58.08 | -10.17 | 432.21 | -25.21 | 1.58 | 432.21 |
| -54.40 | 27.48 | 432.21 | 58.59 | -10.33 | 432.21 | -20.70 | -0.86 | 432.21 |
| -54.08 | 27.38 | 432.21 | 59.04 | -10.48 | 432.21 | -15.52 | -3.38 | 432.21 |
| -53.73 | 27.25 | 432.21 | 59.44 | -10.61 | 432.21 | -9.57 | -5.93 | 432.21 |
| -53.33 | 27.09 | 432.21 | 59.80 | -10.73 | 432.21 | -2.73 | -8.42 | 432.21 |
| -52.89 | 26.92 | 432.21 | 60.12 | -10.83 | 432.21 | 4.24 | -10.53 | 432.21 |
| -52.38 | 26.74 | 432.21 | 60.40 | -10.92 | 432.21 | 10.53 | -12.08 | 432.21 |
| -51.82 | 26.54 | 432.21 | 60.65 | -11.01 | 432.21 | 16.20 | -13.19 | 432.21 |
| -51.18 | 26.33 | 432.21 | 60.86 | -11.12 | 432.21 | 21.27 | -13.97 | 432.21 |
| -50.45 | 26.10 | 432.21 | 61.02 | -11.25 | 432.21 | 25.81 | -14.49 | 432.21 |
| -49.64 | 25.83 | 432.21 | 61.15 | -11.39 | 432.21 | 29.87 | -14.82 | 432.21 |
| -48.74 | 25.53 | 432.21 | 61.23 | -11.54 | 432.21 | 33.48 | -15.01 | 432.21 |
| -47.72 | 25.18 | 432.21 | 61.30 | -11.67 | 432.21 | 36.70 | -15.09 | 432.21 |
| -46.57 | 24.79 | 432.21 | 61.33 | -11.80 | 432.21 | 39.57 | -15.09 | 432.21 |
| -45.29 | 24.35 | 432.21 | 61.35 | -11.91 | 432.21 | 42.12 | -15.05 | 432.21 |
| -43.84 | 23.86 | 432.21 | 61.36 | -12.02 | 432.21 | 44.39 | -14.96 | 432.21 |
| -42.22 | 23.30 | 432.21 | 61.35 | -12.19 | 432.21 | 46.41 | -14.85 | 432.21 |
| -40.39 | 22.68 | 432.21 | -56.29 | 27.02 | 432.21 | 48.21 | -14.72 | 432.21 |
| -38.34 | 21.99 | 432.21 | -56.31 | 26.91 | 432.21 | 49.80 | -14.59 | 432.21 |
| -36.04 | 21.21 | 432.21 | -56.32 | 26.79 | 432.21 | 51.22 | -14.45 | 432.21 |
| -33.45 | 20.33 | 432.21 | -56.32 | 26.65 | 432.21 | 52.48 | -14.32 | 432.21 |
| -30.54 | 19.34 | 432.21 | -56.29 | 26.50 | 432.21 | 53.60 | -14.19 | 432.21 |
| -27.27 | 18.23 | 432.21 | -56.25 | 26.33 | 432.21 | 54.60 | -14.07 | 432.21 |
| -23.60 | 16.98 | 432.21 | -56.17 | 26.15 | 432.21 | 55.49 | -13.95 | 432.21 |
| -19.48 | 15.58 | 432.21 | -56.07 | 25.95 | 432.21 | 56.27 | -13.84 | 432.21 |
| -14.84 | 14.00 | 432.21 | -55.94 | 25.74 | 432.21 | 56.98 | -13.74 | 432.21 |
| -9.63 | 12.24 | 432.21 | -55.77 | 25.52 | 432.21 | 57.60 | -13.64 | 432.21 |
| -3.77 | 10.27 | 432.21 | -55.56 | 25.28 | 432.21 | 58.15 | -13.56 | 432.21 |
| 2.81 | 8.07 | 432.21 | -55.32 | 25.03 | 432.21 | 58.65 | -13.48 | 432.21 |
| 9.39 | 5.87 | 432.21 | -55.04 | 24.75 | 432.21 | 59.08 | -13.41 | 432.21 |
| 15.25 | 3.92 | 432.21 | -54.72 | 24.44 | 432.21 | 59.47 | -13.34 | 432.21 |
| 20.46 | 2.19 | 432.21 | -54.37 | 24.09 | 432.21 | 59.82 | -13.28 | 432.21 |
| 25.10 | 0.65 | 432.21 | -53.97 | 23.69 | 432.21 | 60.13 | -13.23 | 432.21 |

| | | |
|---|---|---|
| 29.23 | -0.72 | 432.21 |
| 32.91 | -1.94 | 432.21 |
| 36.18 | -3.02 | 432.21 |
| 39.10 | -3.98 | 432.21 |
| 41.69 | -4.83 | 432.21 |
| 44.00 | -5.59 | 432.21 |
| 46.05 | -6.27 | 432.21 |
| 47.88 | -6.86 | 432.21 |

| | | |
|---|---|---|
| -53.53 | 23.24 | 432.21 |
| -53.04 | 22.73 | 432.21 |
| -52.49 | 22.16 | 432.21 |
| -51.86 | 21.53 | 432.21 |
| -51.14 | 20.83 | 432.21 |
| -50.32 | 20.05 | 432.21 |
| -49.40 | 19.19 | 432.21 |
| -48.34 | 18.23 | 432.21 |

| | | |
|---|---|---|
| 60.41 | -13.18 | 432.21 |
| 60.64 | -13.12 | 432.21 |
| 60.84 | -13.02 | 432.21 |
| 61.00 | -12.90 | 432.21 |
| 61.12 | -12.77 | 432.21 |
| 61.21 | -12.64 | 432.21 |
| 61.27 | -12.51 | 432.21 |
| 61.31 | -12.40 | 432.21 |

## SECTION 4    Z = 449.99

| X | Y | Z |
|---|---|---|
| -54.26 | 30.72 | 449.99 |
| -54.13 | 30.86 | 449.99 |
| -54.04 | 30.93 | 449.99 |
| -53.92 | 30.99 | 449.99 |
| -53.77 | 31.03 | 449.99 |
| -53.61 | 31.06 | 449.99 |
| -53.42 | 31.07 | 449.99 |
| -53.21 | 31.05 | 449.99 |
| -52.98 | 31.01 | 449.99 |
| -52.72 | 30.94 | 449.99 |
| -52.44 | 30.84 | 449.99 |
| -52.13 | 30.71 | 449.99 |
| -51.79 | 30.55 | 449.99 |
| -51.40 | 30.37 | 449.99 |
| -50.97 | 30.18 | 449.99 |
| -50.48 | 29.96 | 449.99 |
| -49.93 | 29.73 | 449.99 |
| -49.31 | 29.47 | 449.99 |
| -48.60 | 29.18 | 449.99 |
| -47.81 | 28.86 | 449.99 |
| -46.93 | 28.49 | 449.99 |
| -45.94 | 28.07 | 449.99 |
| -44.82 | 27.60 | 449.99 |
| -43.57 | 27.07 | 449.99 |
| -42.17 | 26.47 | 449.99 |
| -40.59 | 25.80 | 449.99 |
| -38.82 | 25.05 | 449.99 |
| -36.82 | 24.22 | 449.99 |

| X | Y | Z |
|---|---|---|
| 48.53 | -11.75 | 449.99 |
| 49.94 | -12.34 | 449.99 |
| 51.19 | -12.86 | 449.99 |
| 52.30 | -13.33 | 449.99 |
| 53.30 | -13.74 | 449.99 |
| 54.18 | -14.10 | 449.99 |
| 54.96 | -14.43 | 449.99 |
| 55.66 | -14.72 | 449.99 |
| 56.29 | -14.98 | 449.99 |
| 56.84 | -15.21 | 449.99 |
| 57.34 | -15.41 | 449.99 |
| 57.77 | -15.60 | 449.99 |
| 58.17 | -15.76 | 449.99 |
| 58.51 | -15.90 | 449.99 |
| 58.82 | -16.03 | 449.99 |
| 59.10 | -16.14 | 449.99 |
| 59.34 | -16.24 | 449.99 |
| 59.55 | -16.35 | 449.99 |
| 59.71 | -16.49 | 449.99 |
| 59.83 | -16.63 | 449.99 |
| 59.92 | -16.78 | 449.99 |
| 59.97 | -16.92 | 449.99 |
| 60.00 | -17.05 | 449.99 |
| 60.02 | -17.16 | 449.99 |
| 60.02 | -17.27 | 449.99 |
| 59.99 | -17.44 | 449.99 |
| -54.34 | 30.55 | 449.99 |
| -54.37 | 30.45 | 449.99 |

| X | Y | Z |
|---|---|---|
| -45.63 | 20.42 | 449.99 |
| -44.33 | 19.19 | 449.99 |
| -42.86 | 17.83 | 449.99 |
| -41.19 | 16.33 | 449.99 |
| -39.28 | 14.67 | 449.99 |
| -37.10 | 12.85 | 449.99 |
| -34.60 | 10.85 | 449.99 |
| -31.75 | 8.68 | 449.99 |
| -28.47 | 6.32 | 449.99 |
| -24.72 | 3.79 | 449.99 |
| -20.39 | 1.09 | 449.99 |
| -15.42 | -1.75 | 449.99 |
| -9.70 | -4.68 | 449.99 |
| -3.12 | -7.65 | 449.99 |
| 3.62 | -10.28 | 449.99 |
| 9.72 | -12.32 | 449.99 |
| 15.23 | -13.90 | 449.99 |
| 20.19 | -15.12 | 449.99 |
| 24.63 | -16.04 | 449.99 |
| 28.61 | -16.75 | 449.99 |
| 32.16 | -17.27 | 449.99 |
| 35.34 | -17.67 | 449.99 |
| 38.17 | -17.95 | 449.99 |
| 40.69 | -18.16 | 449.99 |
| 42.94 | -18.31 | 449.99 |
| 44.95 | -18.41 | 449.99 |
| 46.73 | -18.47 | 449.99 |
| 48.32 | -18.50 | 449.99 |

| -34.58 | 23.27 | 449.99 | -54.38 | 30.32 | 449.99 | 49.74 | -18.52 | 449.99 |
|---|---|---|---|---|---|---|---|---|
| -32.06 | 22.21 | 449.99 | -54.37 | 30.18 | 449.99 | 50.99 | -18.52 | 449.99 |
| -29.23 | 21.01 | 449.99 | -54.35 | 30.03 | 449.99 | 52.12 | -18.52 | 449.99 |
| -26.06 | 19.66 | 449.99 | -54.30 | 29.86 | 449.99 | 53.11 | -18.50 | 449.99 |
| -22.49 | 18.15 | 449.99 | -54.23 | 29.68 | 449.99 | 54.00 | -18.48 | 449.99 |
| -18.48 | 16.45 | 449.99 | -54.13 | 29.49 | 449.99 | 54.79 | -18.46 | 449.99 |
| -13.97 | 14.54 | 449.99 | -54.00 | 29.28 | 449.99 | 55.49 | -18.44 | 449.99 |
| -8.90 | 12.39 | 449.99 | -53.84 | 29.05 | 449.99 | 56.12 | -18.41 | 449.99 |
| -3.21 | 9.99 | 449.99 | -53.64 | 28.81 | 449.99 | 56.67 | -18.39 | 449.99 |
| 3.19 | 7.29 | 449.99 | -53.40 | 28.56 | 449.99 | 57.17 | -18.37 | 449.99 |
| 9.58 | 4.61 | 449.99 | -53.14 | 28.27 | 449.99 | 57.61 | -18.34 | 449.99 |
| 15.27 | 2.21 | 449.99 | -52.83 | 27.95 | 449.99 | 58.00 | -18.32 | 449.99 |
| 20.33 | 0.08 | 449.99 | -52.50 | 27.59 | 449.99 | 58.35 | -18.30 | 449.99 |
| 24.84 | -1.81 | 449.99 | -52.12 | 27.18 | 449.99 | 58.66 | -18.29 | 449.99 |
| 28.85 | -3.50 | 449.99 | -51.70 | 26.71 | 449.99 | 58.94 | -18.27 | 449.99 |
| 32.42 | -5.00 | 449.99 | -51.24 | 26.19 | 449.99 | 59.18 | -18.25 | 449.99 |
| 35.59 | -6.33 | 449.99 | -50.71 | 25.60 | 449.99 | 59.39 | -18.18 | 449.99 |
| 38.42 | -7.52 | 449.99 | -50.11 | 24.95 | 449.99 | 59.56 | -18.09 | 449.99 |
| 40.94 | -8.58 | 449.99 | -49.43 | 24.23 | 449.99 | 59.70 | -17.98 | 449.99 |
| 43.18 | -9.52 | 449.99 | -48.65 | 23.42 | 449.99 | 59.80 | -17.86 | 449.99 |
| 45.17 | -10.35 | 449.99 | -47.77 | 22.52 | 449.99 | 59.88 | -17.75 | 449.99 |
| 46.95 | -11.09 | 449.99 | -46.77 | 21.52 | 449.99 | 59.94 | -17.64 | 449.99 |

## SECTION 5    Z = 467.77

| X | Y | Z | X | Y | Z | X | Y | Z |
|---|---|---|---|---|---|---|---|---|
| -52.24 | 33.86 | 467.77 | 47.26 | -15.76 | 467.77 | -44.00 | 23.34 | 467.77 |
| -52.11 | 34.00 | 467.77 | 48.62 | -16.45 | 467.77 | -42.77 | 22.07 | 467.77 |
| -52.01 | 34.06 | 467.77 | 49.82 | -17.07 | 467.77 | -41.37 | 20.65 | 467.77 |
| -51.89 | 34.11 | 467.77 | 50.90 | -17.61 | 467.77 | -39.77 | 19.08 | 467.77 |
| -51.74 | 34.14 | 467.77 | 51.86 | -18.10 | 467.77 | -37.95 | 17.35 | 467.77 |
| -51.57 | 34.16 | 467.77 | 52.71 | -18.53 | 467.77 | -35.87 | 15.44 | 467.77 |
| -51.39 | 34.15 | 467.77 | 53.47 | -18.92 | 467.77 | -33.50 | 13.34 | 467.77 |
| -51.18 | 34.11 | 467.77 | 54.15 | -19.26 | 467.77 | -30.77 | 11.04 | 467.77 |
| -50.95 | 34.05 | 467.77 | 54.75 | -19.56 | 467.77 | -27.65 | 8.54 | 467.77 |
| -50.70 | 33.96 | 467.77 | 55.28 | -19.84 | 467.77 | -24.06 | 5.82 | 467.77 |
| -50.43 | 33.83 | 467.77 | 55.76 | -20.08 | 467.77 | -19.93 | 2.90 | 467.77 |
| -50.13 | 33.68 | 467.77 | 56.18 | -20.29 | 467.77 | -15.18 | -0.21 | 467.77 |
| -49.80 | 33.49 | 467.77 | 56.56 | -20.48 | 467.77 | -9.70 | -3.49 | 467.77 |
| -49.43 | 33.29 | 467.77 | 56.90 | -20.65 | 467.77 | -3.38 | -6.89 | 467.77 |

| X | Y | Z | X | Y | Z | X | Y | Z |
|---|---|---|---|---|---|---|---|---|
| -49.01 | 33.07 | 467.77 | 57.19 | -20.80 | 467.77 | 3.11 | -9.98 | 467.77 |
| -48.53 | 32.82 | 467.77 | 57.46 | -20.94 | 467.77 | 9.00 | -12.47 | 467.77 |
| -48.00 | 32.55 | 467.77 | 57.70 | -21.06 | 467.77 | 14.32 | -14.47 | 467.77 |
| -47.39 | 32.25 | 467.77 | 57.91 | -21.17 | 467.77 | 19.13 | -16.08 | 467.77 |
| -46.71 | 31.92 | 467.77 | 58.07 | -21.30 | 467.77 | 23.44 | -17.38 | 467.77 |
| -45.95 | 31.54 | 467.77 | 58.18 | -21.45 | 467.77 | 27.32 | -18.43 | 467.77 |
| -45.09 | 31.11 | 467.77 | 58.26 | -21.59 | 467.77 | 30.78 | -19.27 | 467.77 |
| -44.13 | 30.63 | 467.77 | 58.31 | -21.73 | 467.77 | 33.89 | -19.95 | 467.77 |
| -43.05 | 30.09 | 467.77 | 58.34 | -21.86 | 467.77 | 36.66 | -20.51 | 467.77 |
| -41.84 | 29.47 | 467.77 | 58.34 | -21.98 | 467.77 | 39.14 | -20.95 | 467.77 |
| -40.48 | 28.78 | 467.77 | 58.33 | -22.09 | 467.77 | 41.35 | -21.31 | 467.77 |
| -38.95 | 28.01 | 467.77 | 58.30 | -22.26 | 467.77 | 43.32 | -21.61 | 467.77 |
| -37.23 | 27.14 | 467.77 | -52.33 | 33.70 | 467.77 | 45.08 | -21.85 | 467.77 |
| -35.30 | 26.17 | 467.77 | -52.36 | 33.60 | 467.77 | 46.64 | -22.04 | 467.77 |
| -33.12 | 25.07 | 467.77 | -52.37 | 33.47 | 467.77 | 48.04 | -22.20 | 467.77 |
| -30.69 | 23.84 | 467.77 | -52.36 | 33.34 | 467.77 | 49.28 | -22.33 | 467.77 |
| -27.95 | 22.45 | 467.77 | -52.34 | 33.19 | 467.77 | 50.39 | -22.44 | 467.77 |
| -24.87 | 20.89 | 467.77 | -52.29 | 33.02 | 467.77 | 51.38 | -22.53 | 467.77 |
| -21.41 | 19.14 | 467.77 | -52.22 | 32.84 | 467.77 | 52.25 | -22.60 | 467.77 |
| -17.53 | 17.17 | 467.77 | -52.13 | 32.64 | 467.77 | 53.04 | -22.66 | 467.77 |
| -13.17 | 14.95 | 467.77 | -52.00 | 32.44 | 467.77 | 53.73 | -22.71 | 467.77 |
| -8.27 | 12.46 | 467.77 | -51.84 | 32.21 | 467.77 | 54.35 | -22.76 | 467.77 |
| -2.76 | 9.67 | 467.77 | -51.64 | 31.97 | 467.77 | 54.91 | -22.79 | 467.77 |
| 3.43 | 6.53 | 467.77 | -51.41 | 31.71 | 467.77 | 55.40 | -22.82 | 467.77 |
| 9.62 | 3.39 | 467.77 | -51.16 | 31.42 | 467.77 | 55.83 | -22.85 | 467.77 |
| 15.12 | 0.60 | 467.77 | -50.87 | 31.09 | 467.77 | 56.22 | -22.87 | 467.77 |
| 20.01 | -1.89 | 467.77 | -50.55 | 30.71 | 467.77 | 56.57 | -22.88 | 467.77 |
| 24.37 | -4.11 | 467.77 | -50.19 | 30.29 | 467.77 | 56.88 | -22.90 | 467.77 |
| 28.24 | -6.08 | 467.77 | -49.80 | 29.81 | 467.77 | 57.15 | -22.91 | 467.77 |
| 31.69 | -7.84 | 467.77 | -49.35 | 29.28 | 467.77 | 57.40 | -22.92 | 467.77 |
| 34.76 | -9.40 | 467.77 | -48.85 | 28.68 | 467.77 | 57.61 | -22.90 | 467.77 |
| 37.49 | -10.79 | 467.77 | -48.27 | 28.01 | 467.77 | 57.80 | -22.84 | 467.77 |
| 39.93 | -12.03 | 467.77 | -47.62 | 27.27 | 467.77 | 57.95 | -22.75 | 467.77 |
| 42.09 | -13.13 | 467.77 | -46.88 | 26.44 | 467.77 | 58.06 | -22.65 | 467.77 |
| 44.02 | -14.11 | 467.77 | -46.04 | 25.51 | 467.77 | 58.15 | -22.55 | 467.77 |
| 45.73 | -14.99 | 467.77 | -45.09 | 24.48 | 467.77 | 58.22 | -22.45 | 467.77 |

## SECTION 6    Z = 493.17

| X | Y | Z | X | Y | Z | X | Y | Z |
|---|---|---|---|---|---|---|---|---|

| | | | | | | | | |
|---|---|---|---|---|---|---|---|---|
| -49.36 | 37.78 | 493.17 | 45.08 | -20.88 | 493.17 | -41.59 | 27.00 | 493.17 |
| -49.21 | 37.91 | 493.17 | 46.36 | -21.70 | 493.17 | -40.44 | 25.67 | 493.17 |
| -49.10 | 37.96 | 493.17 | 47.50 | -22.43 | 493.17 | -39.13 | 24.20 | 493.17 |
| -48.97 | 37.99 | 493.17 | 48.52 | -23.07 | 493.17 | -37.64 | 22.56 | 493.17 |
| -48.83 | 38.01 | 493.17 | 49.42 | -23.65 | 493.17 | -35.94 | 20.74 | 493.17 |
| -48.66 | 37.99 | 493.17 | 50.23 | -24.17 | 493.17 | -33.99 | 18.73 | 493.17 |
| -48.48 | 37.96 | 493.17 | 50.95 | -24.62 | 493.17 | -31.77 | 16.50 | 493.17 |
| -48.27 | 37.89 | 493.17 | 51.58 | -25.03 | 493.17 | -29.22 | 14.05 | 493.17 |
| -48.06 | 37.80 | 493.17 | 52.15 | -25.39 | 493.17 | -26.30 | 11.36 | 493.17 |
| -47.82 | 37.68 | 493.17 | 52.66 | -25.72 | 493.17 | -22.94 | 8.42 | 493.17 |
| -47.57 | 37.52 | 493.17 | 53.11 | -26.00 | 493.17 | -19.07 | 5.22 | 493.17 |
| -47.29 | 37.34 | 493.17 | 53.51 | -26.26 | 493.17 | -14.62 | 1.77 | 493.17 |
| -46.97 | 37.13 | 493.17 | 53.87 | -26.49 | 493.17 | -9.48 | -1.92 | 493.17 |
| -46.62 | 36.90 | 493.17 | 54.18 | -26.69 | 493.17 | -3.54 | -5.84 | 493.17 |
| -46.22 | 36.64 | 493.17 | 54.46 | -26.87 | 493.17 | 2.56 | -9.51 | 493.17 |
| -45.76 | 36.36 | 493.17 | 54.72 | -27.03 | 493.17 | 8.12 | -12.56 | 493.17 |
| -45.25 | 36.04 | 493.17 | 54.94 | -27.17 | 493.17 | 13.16 | -15.10 | 493.17 |
| -44.68 | 35.69 | 493.17 | 55.14 | -27.30 | 493.17 | 17.72 | -17.21 | 493.17 |
| -44.03 | 35.30 | 493.17 | 55.31 | -27.42 | 493.17 | 21.82 | -18.98 | 493.17 |
| -43.30 | 34.85 | 493.17 | 55.43 | -27.57 | 493.17 | 25.51 | -20.47 | 493.17 |
| -42.49 | 34.35 | 493.17 | 55.50 | -27.71 | 493.17 | 28.83 | -21.71 | 493.17 |
| -41.58 | 33.78 | 493.17 | 55.55 | -27.86 | 493.17 | 31.79 | -22.76 | 493.17 |
| -40.55 | 33.14 | 493.17 | 55.57 | -27.99 | 493.17 | 34.45 | -23.65 | 493.17 |
| -39.40 | 32.42 | 493.17 | 55.56 | -28.10 | 493.17 | 36.83 | -24.41 | 493.17 |
| -38.10 | 31.62 | 493.17 | 55.55 | -28.21 | 493.17 | 38.96 | -25.05 | 493.17 |
| -36.65 | 30.71 | 493.17 | 55.49 | -28.37 | 493.17 | 40.86 | -25.60 | 493.17 |
| -35.01 | 29.70 | 493.17 | -49.44 | 37.62 | 493.17 | 42.55 | -26.07 | 493.17 |
| -33.18 | 28.55 | 493.17 | -49.47 | 37.52 | 493.17 | 44.06 | -26.47 | 493.17 |
| -31.11 | 27.27 | 493.17 | -49.48 | 37.40 | 493.17 | 45.41 | -26.81 | 493.17 |
| -28.80 | 25.82 | 493.17 | -49.47 | 37.26 | 493.17 | 46.62 | -27.11 | 493.17 |
| -26.19 | 24.19 | 493.17 | -49.45 | 37.11 | 493.17 | 47.69 | -27.37 | 493.17 |
| -23.27 | 22.37 | 493.17 | -49.40 | 36.95 | 493.17 | 48.65 | -27.59 | 493.17 |
| -19.99 | 20.31 | 493.17 | -49.33 | 36.77 | 493.17 | 49.50 | -27.79 | 493.17 |
| -16.30 | 17.99 | 493.17 | -49.23 | 36.58 | 493.17 | 50.26 | -27.95 | 493.17 |
| -12.16 | 15.39 | 493.17 | -49.10 | 36.37 | 493.17 | 50.94 | -28.10 | 493.17 |
| -7.51 | 12.47 | 493.17 | -48.94 | 36.15 | 493.17 | 51.54 | -28.23 | 493.17 |
| -2.28 | 9.18 | 493.17 | -48.76 | 35.91 | 493.17 | 52.08 | -28.34 | 493.17 |
| 3.59 | 5.48 | 493.17 | -48.54 | 35.64 | 493.17 | 52.55 | -28.44 | 493.17 |
| 9.45 | 1.78 | 493.17 | -48.30 | 35.33 | 493.17 | 52.98 | -28.53 | 493.17 |
| 14.66 | -1.52 | 493.17 | -48.04 | 34.99 | 493.17 | 53.36 | -28.60 | 493.17 |

| | | | | | | | | |
|---|---|---|---|---|---|---|---|---|
| 19.30 | -4.46 | 493.17 | -47.74 | 34.61 | 493.17 | 53.70 | -28.67 | 493.17 |
| 23.42 | -7.07 | 493.17 | -47.40 | 34.17 | 493.17 | 54.00 | -28.73 | 493.17 |
| 27.09 | -9.41 | 493.17 | -47.03 | 33.68 | 493.17 | 54.26 | -28.78 | 493.17 |
| 30.36 | -11.48 | 493.17 | -46.61 | 33.13 | 493.17 | 54.50 | -28.83 | 493.17 |
| 33.26 | -13.34 | 493.17 | -46.14 | 32.52 | 493.17 | 54.72 | -28.86 | 493.17 |
| 35.85 | -14.98 | 493.17 | -45.60 | 31.83 | 493.17 | 54.91 | -28.85 | 493.17 |
| 38.14 | -16.45 | 493.17 | -44.98 | 31.07 | 493.17 | 55.07 | -28.80 | 493.17 |
| 40.19 | -17.76 | 493.17 | -44.29 | 30.21 | 493.17 | 55.20 | -28.72 | 493.17 |
| 42.01 | -18.92 | 493.17 | -43.50 | 29.26 | 493.17 | 55.31 | -28.64 | 493.17 |
| 43.63 | -19.95 | 493.17 | -42.61 | 28.19 | 493.17 | 55.39 | -28.55 | 493.17 |

## SECTION 7    Z = 518.57

| X | Y | Z | X | Y | Z | X | Y | Z |
|---|---|---|---|---|---|---|---|---|
| -46.54 | 41.08 | 518.57 | 42.64 | -25.24 | 518.57 | -39.19 | 30.09 | 518.57 |
| -46.38 | 41.20 | 518.57 | 43.85 | -26.17 | 518.57 | -38.11 | 28.72 | 518.57 |
| -46.27 | 41.23 | 518.57 | 44.92 | -26.99 | 518.57 | -36.88 | 27.20 | 518.57 |
| -46.14 | 41.24 | 518.57 | 45.88 | -27.73 | 518.57 | -35.48 | 25.50 | 518.57 |
| -45.99 | 41.23 | 518.57 | 46.73 | -28.38 | 518.57 | -33.88 | 23.61 | 518.57 |
| -45.83 | 41.20 | 518.57 | 47.49 | -28.97 | 518.57 | -32.06 | 21.51 | 518.57 |
| -45.65 | 41.13 | 518.57 | 48.16 | -29.49 | 518.57 | -29.97 | 19.19 | 518.57 |
| -45.46 | 41.04 | 518.57 | 48.76 | -29.95 | 518.57 | -27.59 | 16.62 | 518.57 |
| -45.26 | 40.92 | 518.57 | 49.29 | -30.36 | 518.57 | -24.85 | 13.78 | 518.57 |
| -45.04 | 40.77 | 518.57 | 49.77 | -30.72 | 518.57 | -21.70 | 10.65 | 518.57 |
| -44.80 | 40.59 | 518.57 | 50.19 | -31.05 | 518.57 | -18.09 | 7.23 | 518.57 |
| -44.54 | 40.38 | 518.57 | 50.57 | -31.34 | 518.57 | -13.92 | 3.50 | 518.57 |
| -44.24 | 40.15 | 518.57 | 50.90 | -31.60 | 518.57 | -9.11 | -0.54 | 518.57 |
| -43.90 | 39.90 | 518.57 | 51.20 | -31.83 | 518.57 | -3.55 | -4.90 | 518.57 |
| -43.52 | 39.62 | 518.57 | 51.46 | -32.03 | 518.57 | 2.18 | -9.05 | 518.57 |
| -43.09 | 39.30 | 518.57 | 51.70 | -32.21 | 518.57 | 7.41 | -12.57 | 518.57 |
| -42.60 | 38.94 | 518.57 | 51.91 | -32.37 | 518.57 | 12.15 | -15.56 | 518.57 |
| -42.06 | 38.55 | 518.57 | 52.10 | -32.52 | 518.57 | 16.44 | -18.11 | 518.57 |
| -41.44 | 38.10 | 518.57 | 52.26 | -32.65 | 518.57 | 20.32 | -20.28 | 518.57 |
| -40.76 | 37.60 | 518.57 | 52.39 | -32.78 | 518.57 | 23.80 | -22.13 | 518.57 |
| -39.99 | 37.03 | 518.57 | 52.47 | -32.93 | 518.57 | 26.94 | -23.72 | 518.57 |
| -39.12 | 36.40 | 518.57 | 52.52 | -33.07 | 518.57 | 29.75 | -25.09 | 518.57 |
| -38.15 | 35.68 | 518.57 | 52.53 | -33.20 | 518.57 | 32.27 | -26.27 | 518.57 |
| -37.06 | 34.87 | 518.57 | 52.53 | -33.32 | 518.57 | 34.53 | -27.29 | 518.57 |
| -35.83 | 33.97 | 518.57 | 52.50 | -33.42 | 518.57 | 36.55 | -28.17 | 518.57 |
| -34.45 | 32.95 | 518.57 | 52.43 | -33.58 | 518.57 | 38.36 | -28.94 | 518.57 |

| | | | | | | | | | |
|---|---|---|---|---|---|---|---|---|---|
| -32.91 | 31.81 | 518.57 | | -46.63 | 40.92 | 518.57 | 39.97 | -29.60 | 518.57 |
| -31.17 | 30.52 | 518.57 | | -46.65 | 40.82 | 518.57 | 41.41 | -30.18 | 518.57 |
| -29.22 | 29.07 | 518.57 | | -46.66 | 40.70 | 518.57 | 42.70 | -30.69 | 518.57 |
| -27.02 | 27.45 | 518.57 | | -46.65 | 40.57 | 518.57 | 43.85 | -31.13 | 518.57 |
| -24.56 | 25.62 | 518.57 | | -46.63 | 40.42 | 518.57 | 44.87 | -31.52 | 518.57 |
| -21.80 | 23.56 | 518.57 | | -46.57 | 40.25 | 518.57 | 45.79 | -31.86 | 518.57 |
| -18.69 | 21.24 | 518.57 | | -46.50 | 40.08 | 518.57 | 46.60 | -32.15 | 518.57 |
| -15.21 | 18.64 | 518.57 | | -46.39 | 39.89 | 518.57 | 47.33 | -32.42 | 518.57 |
| -11.29 | 15.71 | 518.57 | | -46.27 | 39.69 | 518.57 | 47.98 | -32.65 | 518.57 |
| -6.90 | 12.42 | 518.57 | | -46.11 | 39.47 | 518.57 | 48.55 | -32.85 | 518.57 |
| -1.96 | 8.71 | 518.57 | | -45.93 | 39.22 | 518.57 | 49.07 | -33.03 | 518.57 |
| 3.58 | 4.54 | 518.57 | | -45.73 | 38.94 | 518.57 | 49.53 | -33.19 | 518.57 |
| 9.10 | 0.36 | 518.57 | | -45.51 | 38.63 | 518.57 | 49.93 | -33.33 | 518.57 |
| 14.02 | -3.36 | 518.57 | | -45.26 | 38.28 | 518.57 | 50.30 | -33.45 | 518.57 |
| 18.39 | -6.67 | 518.57 | | -44.98 | 37.89 | 518.57 | 50.62 | -33.56 | 518.57 |
| 22.27 | -9.63 | 518.57 | | -44.66 | 37.44 | 518.57 | 50.91 | -33.66 | 518.57 |
| 25.73 | -12.27 | 518.57 | | -44.31 | 36.94 | 518.57 | 51.17 | -33.74 | 518.57 |
| 28.80 | -14.61 | 518.57 | | -43.92 | 36.38 | 518.57 | 51.39 | -33.82 | 518.57 |
| 31.53 | -16.71 | 518.57 | | -43.47 | 35.76 | 518.57 | 51.60 | -33.89 | 518.57 |
| 33.97 | -18.57 | 518.57 | | -42.96 | 35.06 | 518.57 | 51.78 | -33.93 | 518.57 |
| 36.13 | -20.23 | 518.57 | | -42.38 | 34.27 | 518.57 | 51.95 | -33.92 | 518.57 |
| 38.05 | -21.71 | 518.57 | | -41.73 | 33.39 | 518.57 | 52.10 | -33.88 | 518.57 |
| 39.76 | -23.02 | 518.57 | | -40.98 | 32.41 | 518.57 | 52.22 | -33.82 | 518.57 |
| 41.29 | -24.20 | 518.57 | | -40.14 | 31.32 | 518.57 | 52.31 | -33.74 | 518.57 |

## SECTION 8    Z = 543.97

| X | Y | Z | | X | Y | Z | | X | Y | Z |
|---|---|---|---|---|---|---|---|---|---|---|
| -43.88 | 43.82 | 543.97 | | 40.11 | -28.91 | 543.97 | | -36.85 | 32.70 | 543.97 |
| -43.72 | 43.92 | 543.97 | | 41.24 | -29.93 | 543.97 | | -35.83 | 31.30 | 543.97 |
| -43.60 | 43.94 | 543.97 | | 42.25 | -30.83 | 543.97 | | -34.67 | 29.74 | 543.97 |
| -43.47 | 43.94 | 543.97 | | 43.15 | -31.63 | 543.97 | | -33.34 | 27.99 | 543.97 |
| -43.32 | 43.91 | 543.97 | | 43.95 | -32.35 | 543.97 | | -31.83 | 26.05 | 543.97 |
| -43.17 | 43.86 | 543.97 | | 44.66 | -32.98 | 543.97 | | -30.11 | 23.89 | 543.97 |
| -43.00 | 43.77 | 543.97 | | 45.29 | -33.55 | 543.97 | | -28.15 | 21.48 | 543.97 |
| -42.83 | 43.64 | 543.97 | | 45.86 | -34.05 | 543.97 | | -25.90 | 18.82 | 543.97 |
| -42.65 | 43.49 | 543.97 | | 46.36 | -34.50 | 543.97 | | -23.32 | 15.86 | 543.97 |
| -42.45 | 43.31 | 543.97 | | 46.81 | -34.90 | 543.97 | | -20.37 | 12.59 | 543.97 |
| -42.23 | 43.11 | 543.97 | | 47.20 | -35.26 | 543.97 | | -16.97 | 8.99 | 543.97 |
| -41.98 | 42.89 | 543.97 | | 47.56 | -35.57 | 543.97 | | -13.06 | 5.03 | 543.97 |

| | | | | | | | | |
|---|---|---|---|---|---|---|---|---|
| -41.70 | 42.64 | 543.97 | 47.87 | -35.85 | 543.97 | -8.54 | 0.70 | 543.97 |
| -41.37 | 42.37 | 543.97 | 48.15 | -36.10 | 543.97 | -3.33 | -4.01 | 543.97 |
| -41.01 | 42.06 | 543.97 | 48.40 | -36.33 | 543.97 | 2.03 | -8.56 | 543.97 |
| -40.60 | 41.72 | 543.97 | 48.62 | -36.53 | 543.97 | 6.92 | -12.46 | 543.97 |
| -40.14 | 41.33 | 543.97 | 48.82 | -36.70 | 543.97 | 11.36 | -15.82 | 543.97 |
| -39.63 | 40.90 | 543.97 | 49.00 | -36.86 | 543.97 | 15.38 | -18.72 | 543.97 |
| -39.06 | 40.40 | 543.97 | 49.15 | -37.00 | 543.97 | 19.01 | -21.22 | 543.97 |
| -38.41 | 39.85 | 543.97 | 49.29 | -37.12 | 543.97 | 22.29 | -23.39 | 543.97 |
| -37.68 | 39.23 | 543.97 | 49.39 | -37.26 | 543.97 | 25.23 | -25.27 | 543.97 |
| -36.87 | 38.53 | 543.97 | 49.44 | -37.40 | 543.97 | 27.87 | -26.90 | 543.97 |
| -35.95 | 37.74 | 543.97 | 49.46 | -37.53 | 543.97 | 30.25 | -28.33 | 543.97 |
| -34.92 | 36.86 | 543.97 | 49.45 | -37.65 | 543.97 | 32.37 | -29.57 | 543.97 |
| -33.77 | 35.87 | 543.97 | 49.42 | -37.75 | 543.97 | 34.27 | -30.66 | 543.97 |
| -32.47 | 34.75 | 543.97 | 49.34 | -37.90 | 543.97 | 35.98 | -31.61 | 543.97 |
| -31.01 | 33.50 | 543.97 | -43.98 | 43.67 | 543.97 | 37.50 | -32.45 | 543.97 |
| -29.37 | 32.09 | 543.97 | -44.00 | 43.56 | 543.97 | 38.86 | -33.18 | 543.97 |
| -27.53 | 30.51 | 543.97 | -44.01 | 43.44 | 543.97 | 40.07 | -33.83 | 543.97 |
| -25.46 | 28.72 | 543.97 | -44.00 | 43.31 | 543.97 | 41.16 | -34.39 | 543.97 |
| -23.14 | 26.72 | 543.97 | -43.97 | 43.16 | 543.97 | 42.13 | -34.89 | 543.97 |
| -20.54 | 24.47 | 543.97 | -43.91 | 43.00 | 543.97 | 42.99 | -35.33 | 543.97 |
| -17.61 | 21.93 | 543.97 | -43.83 | 42.83 | 543.97 | 43.76 | -35.72 | 543.97 |
| -14.33 | 19.08 | 543.97 | -43.72 | 42.65 | 543.97 | 44.45 | -36.07 | 543.97 |
| -10.64 | 15.88 | 543.97 | -43.58 | 42.45 | 543.97 | 45.06 | -36.37 | 543.97 |
| -6.50 | 12.27 | 543.97 | -43.43 | 42.23 | 543.97 | 45.60 | -36.64 | 543.97 |
| -1.85 | 8.21 | 543.97 | -43.26 | 41.98 | 543.97 | 46.09 | -36.88 | 543.97 |
| 3.36 | 3.64 | 543.97 | -43.07 | 41.70 | 543.97 | 46.52 | -37.09 | 543.97 |
| 8.56 | -0.92 | 543.97 | -42.86 | 41.39 | 543.97 | 46.91 | -37.28 | 543.97 |
| 13.18 | -4.99 | 543.97 | -42.62 | 41.03 | 543.97 | 47.25 | -37.44 | 543.97 |
| 17.29 | -8.62 | 543.97 | -42.36 | 40.63 | 543.97 | 47.56 | -37.59 | 543.97 |
| 20.95 | -11.86 | 543.97 | -42.06 | 40.17 | 543.97 | 47.83 | -37.72 | 543.97 |
| 24.20 | -14.74 | 543.97 | -41.73 | 39.67 | 543.97 | 48.07 | -37.83 | 543.97 |
| 27.09 | -17.31 | 543.97 | -41.35 | 39.10 | 543.97 | 48.29 | -37.94 | 543.97 |
| 29.66 | -19.59 | 543.97 | -40.92 | 38.47 | 543.97 | 48.48 | -38.03 | 543.97 |
| 31.94 | -21.63 | 543.97 | -40.43 | 37.75 | 543.97 | 48.65 | -38.11 | 543.97 |
| 33.98 | -23.44 | 543.97 | -39.88 | 36.96 | 543.97 | 48.82 | -38.15 | 543.97 |
| 35.79 | -25.06 | 543.97 | -39.26 | 36.07 | 543.97 | 48.97 | -38.14 | 543.97 |
| 37.40 | -26.49 | 543.97 | -38.55 | 35.07 | 543.97 | 49.10 | -38.11 | 543.97 |
| 38.83 | -27.77 | 543.97 | -37.76 | 33.95 | 543.97 | 49.20 | -38.05 | 543.97 |

**SECTION 9     Z = 569.37**

| X | Y | Z | X | Y | Z | X | Y | Z |
|---|---|---|---|---|---|---|---|---|
| -41.44 | 46.07 | 569.37 | 37.57 | -31.98 | 569.37 | -34.60 | 34.88 | 569.37 |
| -41.27 | 46.15 | 569.37 | 38.64 | -33.06 | 569.37 | -33.61 | 33.47 | 569.37 |
| -41.15 | 46.16 | 569.37 | 39.60 | -34.02 | 569.37 | -32.50 | 31.88 | 569.37 |
| -41.02 | 46.14 | 569.37 | 40.45 | -34.87 | 569.37 | -31.23 | 30.11 | 569.37 |
| -40.88 | 46.08 | 569.37 | 41.21 | -35.63 | 569.37 | -29.78 | 28.14 | 569.37 |
| -40.74 | 46.00 | 569.37 | 41.89 | -36.30 | 569.37 | -28.14 | 25.93 | 569.37 |
| -40.59 | 45.88 | 569.37 | 42.49 | -36.90 | 569.37 | -26.27 | 23.48 | 569.37 |
| -40.44 | 45.74 | 569.37 | 43.02 | -37.44 | 569.37 | -24.14 | 20.74 | 569.37 |
| -40.27 | 45.57 | 569.37 | 43.50 | -37.91 | 569.37 | -21.69 | 17.70 | 569.37 |
| -40.09 | 45.38 | 569.37 | 43.92 | -38.33 | 569.37 | -18.90 | 14.33 | 569.37 |
| -39.88 | 45.16 | 569.37 | 44.30 | -38.71 | 569.37 | -15.69 | 10.59 | 569.37 |
| -39.65 | 44.93 | 569.37 | 44.63 | -39.04 | 569.37 | -12.00 | 6.46 | 569.37 |
| -39.38 | 44.66 | 569.37 | 44.93 | -39.34 | 569.37 | -7.77 | 1.92 | 569.37 |
| -39.08 | 44.37 | 569.37 | 45.20 | -39.61 | 569.37 | -2.88 | -3.07 | 569.37 |
| -38.74 | 44.04 | 569.37 | 45.43 | -39.84 | 569.37 | 2.14 | -7.94 | 569.37 |
| -38.35 | 43.66 | 569.37 | 45.64 | -40.06 | 569.37 | 6.72 | -12.16 | 569.37 |
| -37.93 | 43.24 | 569.37 | 45.83 | -40.24 | 569.37 | 10.87 | -15.83 | 569.37 |
| -37.45 | 42.77 | 569.37 | 46.00 | -40.41 | 569.37 | 14.62 | -19.02 | 569.37 |
| -36.91 | 42.24 | 569.37 | 46.15 | -40.56 | 569.37 | 18.02 | -21.80 | 569.37 |
| -36.30 | 41.64 | 569.37 | 46.28 | -40.69 | 569.37 | 21.07 | -24.24 | 569.37 |
| -35.63 | 40.97 | 569.37 | 46.39 | -40.81 | 569.37 | 23.82 | -26.37 | 569.37 |
| -34.86 | 40.21 | 569.37 | 46.46 | -40.94 | 569.37 | 26.29 | -28.23 | 569.37 |
| -34.01 | 39.37 | 569.37 | 46.49 | -41.07 | 569.37 | 28.50 | -29.87 | 569.37 |
| -33.04 | 38.41 | 569.37 | 46.49 | -41.19 | 569.37 | 30.48 | -31.31 | 569.37 |
| -31.96 | 37.34 | 569.37 | 46.46 | -41.29 | 569.37 | 32.26 | -32.57 | 569.37 |
| -30.74 | 36.14 | 569.37 | 46.37 | -41.44 | 569.37 | 33.85 | -33.69 | 569.37 |
| -29.37 | 34.79 | 569.37 | -41.54 | 45.92 | 569.37 | 35.27 | -34.67 | 569.37 |
| -27.84 | 33.27 | 569.37 | -41.56 | 45.81 | 569.37 | 36.54 | -35.54 | 569.37 |
| -26.12 | 31.56 | 569.37 | -41.56 | 45.69 | 569.37 | 37.67 | -36.30 | 569.37 |
| -24.18 | 29.64 | 569.37 | -41.55 | 45.56 | 569.37 | 38.68 | -36.98 | 569.37 |
| -22.01 | 27.48 | 569.37 | -41.50 | 45.42 | 569.37 | 39.58 | -37.58 | 569.37 |
| -19.56 | 25.06 | 569.37 | -41.43 | 45.26 | 569.37 | 40.39 | -38.11 | 569.37 |
| -16.82 | 22.33 | 569.37 | -41.34 | 45.10 | 569.37 | 41.11 | -38.58 | 569.37 |
| -13.74 | 19.27 | 569.37 | -41.23 | 44.92 | 569.37 | 41.75 | -38.99 | 569.37 |
| -10.27 | 15.83 | 569.37 | -41.09 | 44.73 | 569.37 | 42.32 | -39.36 | 569.37 |
| -6.38 | 11.96 | 569.37 | -40.94 | 44.50 | 569.37 | 42.83 | -39.69 | 569.37 |
| -2.02 | 7.61 | 569.37 | -40.78 | 44.25 | 569.37 | 43.28 | -39.98 | 569.37 |
| 2.89 | 2.71 | 569.37 | -40.60 | 43.97 | 569.37 | 43.69 | -40.24 | 569.37 |

| X | Y | Z | | X | Y | Z | | X | Y | Z |
|---|---|---|---|---|---|---|---|---|---|---|
| 7.78 | -2.17 | 569.37 | | -40.40 | 43.65 | 569.37 | | 44.05 | -40.46 | 569.37 |
| 12.14 | -6.52 | 569.37 | | -40.17 | 43.29 | 569.37 | | 44.37 | -40.67 | 569.37 |
| 16.01 | -10.40 | 569.37 | | -39.91 | 42.88 | 569.37 | | 44.66 | -40.85 | 569.37 |
| 19.46 | -13.85 | 569.37 | | -39.62 | 42.43 | 569.37 | | 44.91 | -41.01 | 569.37 |
| 22.53 | -16.92 | 569.37 | | -39.30 | 41.92 | 569.37 | | 45.14 | -41.15 | 569.37 |
| 25.25 | -19.65 | 569.37 | | -38.93 | 41.35 | 569.37 | | 45.34 | -41.27 | 569.37 |
| 27.68 | -22.08 | 569.37 | | -38.51 | 40.71 | 569.37 | | 45.52 | -41.39 | 569.37 |
| 29.85 | -24.25 | 569.37 | | -38.04 | 39.99 | 569.37 | | 45.68 | -41.49 | 569.37 |
| 31.77 | -26.18 | 569.37 | | -37.51 | 39.19 | 569.37 | | 45.82 | -41.57 | 569.37 |
| 33.48 | -27.89 | 569.37 | | -36.91 | 38.29 | 569.37 | | 45.97 | -41.61 | 569.37 |
| 35.01 | -29.42 | 569.37 | | -36.23 | 37.28 | 569.37 | | 46.10 | -41.60 | 569.37 |
| 36.36 | -30.78 | 569.37 | | -35.46 | 36.15 | 569.37 | | 46.22 | -41.56 | 569.37 |

**SECTION 10    Z = 589.69**

| X | Y | Z | | X | Y | Z | | X | Y | Z |
|---|---|---|---|---|---|---|---|---|---|---|
| -39.67 | 47.56 | 589.69 | | 35.63 | -34.04 | 589.69 | | -32.91 | 36.36 | 589.69 |
| -39.49 | 47.64 | 589.69 | | 36.66 | -35.15 | 589.69 | | -31.95 | 34.93 | 589.69 |
| -39.37 | 47.63 | 589.69 | | 37.58 | -36.14 | 589.69 | | -30.86 | 33.34 | 589.69 |
| -39.25 | 47.59 | 589.69 | | 38.40 | -37.03 | 589.69 | | -29.63 | 31.55 | 589.69 |
| -39.12 | 47.51 | 589.69 | | 39.13 | -37.81 | 589.69 | | -28.23 | 29.56 | 589.69 |
| -38.99 | 47.41 | 589.69 | | 39.78 | -38.51 | 589.69 | | -26.64 | 27.33 | 589.69 |
| -38.85 | 47.28 | 589.69 | | 40.35 | -39.13 | 589.69 | | -24.83 | 24.84 | 589.69 |
| -38.71 | 47.12 | 589.69 | | 40.87 | -39.69 | 589.69 | | -22.76 | 22.06 | 589.69 |
| -38.56 | 46.94 | 589.69 | | 41.32 | -40.18 | 589.69 | | -20.41 | 18.97 | 589.69 |
| -38.38 | 46.75 | 589.69 | | 41.73 | -40.62 | 589.69 | | -17.72 | 15.52 | 589.69 |
| -38.19 | 46.52 | 589.69 | | 42.09 | -41.01 | 589.69 | | -14.65 | 11.70 | 589.69 |
| -37.96 | 46.27 | 589.69 | | 42.42 | -41.36 | 589.69 | | -11.12 | 7.46 | 589.69 |
| -37.71 | 46.00 | 589.69 | | 42.70 | -41.67 | 589.69 | | -7.08 | 2.77 | 589.69 |
| -37.42 | 45.69 | 589.69 | | 42.96 | -41.94 | 589.69 | | -2.42 | -2.40 | 589.69 |
| -37.10 | 45.34 | 589.69 | | 43.19 | -42.19 | 589.69 | | 2.35 | -7.48 | 589.69 |
| -36.74 | 44.94 | 589.69 | | 43.39 | -42.40 | 589.69 | | 6.68 | -11.92 | 589.69 |
| -36.34 | 44.50 | 589.69 | | 43.57 | -42.60 | 589.69 | | 10.61 | -15.79 | 589.69 |
| -35.88 | 44.00 | 589.69 | | 43.73 | -42.77 | 589.69 | | 14.16 | -19.19 | 589.69 |
| -35.37 | 43.45 | 589.69 | | 43.87 | -42.92 | 589.69 | | 17.37 | -22.16 | 589.69 |
| -34.80 | 42.82 | 589.69 | | 44.00 | -43.06 | 589.69 | | 20.25 | -24.77 | 589.69 |
| -34.16 | 42.11 | 589.69 | | 44.11 | -43.18 | 589.69 | | 22.85 | -27.07 | 589.69 |
| -33.44 | 41.32 | 589.69 | | 44.20 | -43.30 | 589.69 | | 25.17 | -29.09 | 589.69 |
| -32.63 | 40.43 | 589.69 | | 44.24 | -43.42 | 589.69 | | 27.26 | -30.87 | 589.69 |
| -31.71 | 39.43 | 589.69 | | 44.25 | -43.54 | 589.69 | | 29.13 | -32.44 | 589.69 |

| | | | | | | | | |
|---|---|---|---|---|---|---|---|---|
| -30.69 | 38.30 | 589.69 | 44.22 | -43.64 | 589.69 | 30.80 | -33.82 | 589.69 |
| -29.54 | 37.04 | 589.69 | 44.13 | -43.79 | 589.69 | 32.30 | -35.05 | 589.69 |
| -28.24 | 35.62 | 589.69 | -39.76 | 47.41 | 589.69 | 33.64 | -36.13 | 589.69 |
| -26.79 | 34.02 | 589.69 | -39.78 | 47.31 | 589.69 | 34.84 | -37.09 | 589.69 |
| -25.15 | 32.23 | 589.69 | -39.77 | 47.19 | 589.69 | 35.90 | -37.93 | 589.69 |
| -23.32 | 30.22 | 589.69 | -39.74 | 47.06 | 589.69 | 36.86 | -38.68 | 589.69 |
| -21.25 | 27.95 | 589.69 | -39.69 | 46.92 | 589.69 | 37.71 | -39.35 | 589.69 |
| -18.93 | 25.41 | 589.69 | -39.61 | 46.77 | 589.69 | 38.47 | -39.94 | 589.69 |
| -16.33 | 22.56 | 589.69 | -39.51 | 46.61 | 589.69 | 39.15 | -40.46 | 589.69 |
| -13.40 | 19.35 | 589.69 | -39.40 | 46.44 | 589.69 | 39.75 | -40.92 | 589.69 |
| -10.10 | 15.75 | 589.69 | -39.27 | 46.24 | 589.69 | 40.29 | -41.34 | 589.69 |
| -6.40 | 11.70 | 589.69 | -39.13 | 46.01 | 589.69 | 40.77 | -41.70 | 589.69 |
| -2.24 | 7.16 | 589.69 | -38.97 | 45.76 | 589.69 | 41.19 | -42.02 | 589.69 |
| 2.43 | 2.05 | 589.69 | -38.79 | 45.48 | 589.69 | 41.58 | -42.31 | 589.69 |
| 7.10 | -3.05 | 589.69 | -38.59 | 45.16 | 589.69 | 41.92 | -42.57 | 589.69 |
| 11.26 | -7.58 | 589.69 | -38.36 | 44.80 | 589.69 | 42.22 | -42.80 | 589.69 |
| 14.97 | -11.61 | 589.69 | -38.11 | 44.39 | 589.69 | 42.49 | -43.00 | 589.69 |
| 18.26 | -15.20 | 589.69 | -37.83 | 43.94 | 589.69 | 42.73 | -43.18 | 589.69 |
| 21.20 | -18.39 | 589.69 | -37.51 | 43.43 | 589.69 | 42.94 | -43.34 | 589.69 |
| 23.82 | -21.23 | 589.69 | -37.14 | 42.86 | 589.69 | 43.13 | -43.48 | 589.69 |
| 26.14 | -23.76 | 589.69 | -36.74 | 42.21 | 589.69 | 43.30 | -43.61 | 589.69 |
| 28.22 | -26.01 | 589.69 | -36.27 | 41.49 | 589.69 | 43.45 | -43.72 | 589.69 |
| 30.06 | -28.01 | 589.69 | -35.75 | 40.69 | 589.69 | 43.58 | -43.82 | 589.69 |
| 31.71 | -29.79 | 589.69 | -35.17 | 39.78 | 589.69 | 43.71 | -43.89 | 589.69 |
| 33.17 | -31.37 | 589.69 | -34.50 | 38.77 | 589.69 | 43.85 | -43.91 | 589.69 |
| 34.47 | -32.78 | 589.69 | -33.75 | 37.63 | 589.69 | 43.96 | -43.90 | 589.69 |

## SECTION 11    Z = 610.01

| X | Y | Z | X | Y | Z | X | Y | Z |
|---|---|---|---|---|---|---|---|---|
| -38.07 | 48.83 | 610.01 | 33.82 | -35.76 | 610.01 | -31.37 | 37.60 | 610.01 |
| -37.88 | 48.88 | 610.01 | 34.81 | -36.91 | 610.01 | -30.43 | 36.16 | 610.01 |
| -37.77 | 48.85 | 610.01 | 35.69 | -37.94 | 610.01 | -29.37 | 34.55 | 610.01 |
| -37.65 | 48.79 | 610.01 | 36.48 | -38.85 | 610.01 | -28.17 | 32.75 | 610.01 |
| -37.53 | 48.70 | 610.01 | 37.18 | -39.66 | 610.01 | -26.81 | 30.74 | 610.01 |
| -37.42 | 48.58 | 610.01 | 37.80 | -40.38 | 610.01 | -25.26 | 28.48 | 610.01 |
| -37.30 | 48.44 | 610.01 | 38.35 | -41.02 | 610.01 | -23.51 | 25.97 | 610.01 |
| -37.17 | 48.27 | 610.01 | 38.85 | -41.59 | 610.01 | -21.51 | 23.15 | 610.01 |
| -37.02 | 48.09 | 610.01 | 39.28 | -42.10 | 610.01 | -19.24 | 20.01 | 610.01 |
| -36.85 | 47.89 | 610.01 | 39.67 | -42.56 | 610.01 | -16.65 | 16.51 | 610.01 |

| | | |
|---|---|---|
| -36.66 | 47.66 | 610.01 |
| -36.45 | 47.40 | 610.01 |
| -36.21 | 47.11 | 610.01 |
| -35.94 | 46.78 | 610.01 |
| -35.63 | 46.42 | 610.01 |
| -35.29 | 46.01 | 610.01 |
| -34.91 | 45.55 | 610.01 |
| -34.48 | 45.04 | 610.01 |
| -33.99 | 44.45 | 610.01 |
| -33.45 | 43.80 | 610.01 |
| -32.84 | 43.07 | 610.01 |
| -32.16 | 42.24 | 610.01 |
| -31.38 | 41.32 | 610.01 |
| -30.52 | 40.28 | 610.01 |
| -29.54 | 39.11 | 610.01 |
| -28.45 | 37.80 | 610.01 |
| -27.22 | 36.32 | 610.01 |
| -25.84 | 34.67 | 610.01 |
| -24.28 | 32.80 | 610.01 |
| -22.54 | 30.71 | 610.01 |
| -20.57 | 28.37 | 610.01 |
| -18.37 | 25.73 | 610.01 |
| -15.89 | 22.77 | 610.01 |
| -13.09 | 19.44 | 610.01 |
| -9.96 | 15.71 | 610.01 |
| -6.43 | 11.52 | 610.01 |
| -2.46 | 6.81 | 610.01 |
| 2.01 | 1.52 | 610.01 |
| 6.48 | -3.75 | 610.01 |
| 10.45 | -8.44 | 610.01 |
| 14.00 | -12.61 | 610.01 |
| 17.16 | -16.32 | 610.01 |
| 19.97 | -19.61 | 610.01 |
| 22.48 | -22.55 | 610.01 |
| 24.71 | -25.16 | 610.01 |
| 26.70 | -27.48 | 610.01 |
| 28.47 | -29.54 | 610.01 |
| 30.05 | -31.38 | 610.01 |
| 31.45 | -33.01 | 610.01 |
| 32.70 | -34.47 | 610.01 |

| | | |
|---|---|---|
| 40.02 | -42.96 | 610.01 |
| 40.33 | -43.32 | 610.01 |
| 40.61 | -43.64 | 610.01 |
| 40.85 | -43.92 | 610.01 |
| 41.07 | -44.17 | 610.01 |
| 41.27 | -44.40 | 610.01 |
| 41.44 | -44.60 | 610.01 |
| 41.59 | -44.77 | 610.01 |
| 41.73 | -44.93 | 610.01 |
| 41.85 | -45.08 | 610.01 |
| 41.96 | -45.20 | 610.01 |
| 42.06 | -45.31 | 610.01 |
| 42.12 | -45.43 | 610.01 |
| 42.14 | -45.54 | 610.01 |
| 42.12 | -45.64 | 610.01 |
| 42.03 | -45.79 | 610.01 |
| -38.15 | 48.68 | 610.01 |
| -38.16 | 48.57 | 610.01 |
| -38.14 | 48.45 | 610.01 |
| -38.10 | 48.33 | 610.01 |
| -38.04 | 48.19 | 610.01 |
| -37.95 | 48.05 | 610.01 |
| -37.85 | 47.89 | 610.01 |
| -37.74 | 47.71 | 610.01 |
| -37.61 | 47.51 | 610.01 |
| -37.47 | 47.29 | 610.01 |
| -37.32 | 47.03 | 610.01 |
| -37.14 | 46.75 | 610.01 |
| -36.94 | 46.43 | 610.01 |
| -36.72 | 46.07 | 610.01 |
| -36.47 | 45.66 | 610.01 |
| -36.19 | 45.21 | 610.01 |
| -35.88 | 44.69 | 610.01 |
| -35.52 | 44.12 | 610.01 |
| -35.12 | 43.48 | 610.01 |
| -34.67 | 42.76 | 610.01 |
| -34.16 | 41.95 | 610.01 |
| -33.58 | 41.04 | 610.01 |
| -32.93 | 40.02 | 610.01 |
| -32.20 | 38.88 | 610.01 |

| | | |
|---|---|---|
| -13.69 | 12.61 | 610.01 |
| -10.31 | 8.28 | 610.01 |
| -6.44 | 3.46 | 610.01 |
| -2.00 | -1.87 | 610.01 |
| 2.54 | -7.13 | 610.01 |
| 6.66 | -11.75 | 610.01 |
| 10.38 | -15.80 | 610.01 |
| 13.75 | -19.36 | 610.01 |
| 16.78 | -22.50 | 610.01 |
| 19.50 | -25.26 | 610.01 |
| 21.95 | -27.70 | 610.01 |
| 24.15 | -29.85 | 610.01 |
| 26.12 | -31.74 | 610.01 |
| 27.88 | -33.42 | 610.01 |
| 29.46 | -34.91 | 610.01 |
| 30.87 | -36.22 | 610.01 |
| 32.14 | -37.38 | 610.01 |
| 33.26 | -38.42 | 610.01 |
| 34.27 | -39.33 | 610.01 |
| 35.17 | -40.14 | 610.01 |
| 35.97 | -40.86 | 610.01 |
| 36.69 | -41.50 | 610.01 |
| 37.32 | -42.06 | 610.01 |
| 37.89 | -42.57 | 610.01 |
| 38.40 | -43.01 | 610.01 |
| 38.85 | -43.41 | 610.01 |
| 39.25 | -43.76 | 610.01 |
| 39.61 | -44.08 | 610.01 |
| 39.93 | -44.36 | 610.01 |
| 40.22 | -44.60 | 610.01 |
| 40.47 | -44.82 | 610.01 |
| 40.70 | -45.02 | 610.01 |
| 40.90 | -45.19 | 610.01 |
| 41.08 | -45.35 | 610.01 |
| 41.24 | -45.49 | 610.01 |
| 41.38 | -45.61 | 610.01 |
| 41.50 | -45.72 | 610.01 |
| 41.62 | -45.81 | 610.01 |
| 41.74 | -45.87 | 610.01 |
| 41.85 | -45.88 | 610.01 |

## SECTION 12    Z = 622.71

| X | Y | Z | X | Y | Z | X | Y | Z |
|---|---|---|---|---|---|---|---|---|
| -37.18 | 49.49 | 622.71 | 32.76 | -36.69 | 622.71 | -30.51 | 38.25 | 622.71 |
| -36.99 | 49.53 | 622.71 | 33.73 | -37.86 | 622.71 | -29.58 | 36.81 | 622.71 |
| -36.88 | 49.49 | 622.71 | 34.59 | -38.90 | 622.71 | -28.54 | 35.19 | 622.71 |
| -36.77 | 49.42 | 622.71 | 35.36 | -39.82 | 622.71 | -27.35 | 33.38 | 622.71 |
| -36.66 | 49.32 | 622.71 | 36.04 | -40.65 | 622.71 | -26.01 | 31.36 | 622.71 |
| -36.56 | 49.19 | 622.71 | 36.65 | -41.38 | 622.71 | -24.49 | 29.10 | 622.71 |
| -36.44 | 49.04 | 622.71 | 37.19 | -42.04 | 622.71 | -22.77 | 26.56 | 622.71 |
| -36.31 | 48.88 | 622.71 | 37.67 | -42.62 | 622.71 | -20.81 | 23.73 | 622.71 |
| -36.17 | 48.69 | 622.71 | 38.10 | -43.14 | 622.71 | -18.58 | 20.56 | 622.71 |
| -36.01 | 48.48 | 622.71 | 38.48 | -43.60 | 622.71 | -16.04 | 17.03 | 622.71 |
| -35.82 | 48.25 | 622.71 | 38.82 | -44.00 | 622.71 | -13.15 | 13.09 | 622.71 |
| -35.62 | 47.98 | 622.71 | 39.12 | -44.37 | 622.71 | -9.85 | 8.71 | 622.71 |
| -35.38 | 47.69 | 622.71 | 39.39 | -44.69 | 622.71 | -6.08 | 3.83 | 622.71 |
| -35.12 | 47.36 | 622.71 | 39.63 | -44.98 | 622.71 | -1.76 | -1.59 | 622.71 |
| -34.83 | 46.99 | 622.71 | 39.85 | -45.24 | 622.71 | 2.65 | -6.95 | 622.71 |
| -34.49 | 46.57 | 622.71 | 40.04 | -45.47 | 622.71 | 6.65 | -11.66 | 622.71 |
| -34.12 | 46.10 | 622.71 | 40.20 | -45.67 | 622.71 | 10.26 | -15.81 | 622.71 |
| -33.70 | 45.58 | 622.71 | 40.35 | -45.85 | 622.71 | 13.52 | -19.46 | 622.71 |
| -33.24 | 44.98 | 622.71 | 40.49 | -46.01 | 622.71 | 16.45 | -22.68 | 622.71 |
| -32.71 | 44.32 | 622.71 | 40.61 | -46.16 | 622.71 | 19.08 | -25.52 | 622.71 |
| -32.12 | 43.57 | 622.71 | 40.71 | -46.28 | 622.71 | 21.45 | -28.03 | 622.71 |
| -31.45 | 42.73 | 622.71 | 40.81 | -46.40 | 622.71 | 23.57 | -30.25 | 622.71 |
| -30.70 | 41.79 | 622.71 | 40.89 | -46.50 | 622.71 | 25.47 | -32.21 | 622.71 |
| -29.86 | 40.73 | 622.71 | 40.92 | -46.61 | 622.71 | 27.17 | -33.95 | 622.71 |
| -28.92 | 39.54 | 622.71 | 40.91 | -46.72 | 622.71 | 28.70 | -35.49 | 622.71 |
| -27.85 | 38.20 | 622.71 | 40.81 | -46.86 | 622.71 | 30.06 | -36.85 | 622.71 |
| -26.66 | 36.69 | 622.71 | -37.26 | 49.34 | 622.71 | 31.28 | -38.05 | 622.71 |
| -25.32 | 35.01 | 622.71 | -37.26 | 49.23 | 622.71 | 32.36 | -39.13 | 622.71 |
| -23.81 | 33.11 | 622.71 | -37.23 | 49.12 | 622.71 | 33.33 | -40.07 | 622.71 |
| -22.11 | 30.98 | 622.71 | -37.18 | 49.00 | 622.71 | 34.20 | -40.92 | 622.71 |
| -20.20 | 28.59 | 622.71 | -37.11 | 48.87 | 622.71 | 34.97 | -41.67 | 622.71 |
| -18.06 | 25.90 | 622.71 | -37.02 | 48.72 | 622.71 | 35.66 | -42.33 | 622.71 |
| -15.65 | 22.89 | 622.71 | -36.93 | 48.56 | 622.71 | 36.28 | -42.92 | 622.71 |

| | | | | | | | | |
|---|---|---|---|---|---|---|---|---|
| -12.93 | 19.50 | 622.71 | -36.81 | 48.39 | 622.71 | 36.82 | -43.44 | 622.71 |
| -9.88 | 15.70 | 622.71 | -36.69 | 48.18 | 622.71 | 37.31 | -43.91 | 622.71 |
| -6.45 | 11.43 | 622.71 | -36.55 | 47.96 | 622.71 | 37.75 | -44.32 | 622.71 |
| -2.58 | 6.63 | 622.71 | -36.40 | 47.70 | 622.71 | 38.14 | -44.69 | 622.71 |
| 1.76 | 1.25 | 622.71 | -36.22 | 47.42 | 622.71 | 38.48 | -45.02 | 622.71 |
| 6.11 | -4.12 | 622.71 | -36.03 | 47.10 | 622.71 | 38.79 | -45.31 | 622.71 |
| 9.99 | -8.89 | 622.71 | -35.81 | 46.74 | 622.71 | 39.06 | -45.57 | 622.71 |
| 13.44 | -13.13 | 622.71 | -35.56 | 46.33 | 622.71 | 39.31 | -45.80 | 622.71 |
| 16.52 | -16.90 | 622.71 | -35.28 | 45.87 | 622.71 | 39.52 | -46.00 | 622.71 |
| 19.26 | -20.26 | 622.71 | -34.97 | 45.36 | 622.71 | 39.72 | -46.18 | 622.71 |
| 21.71 | -23.24 | 622.71 | -34.62 | 44.79 | 622.71 | 39.89 | -46.34 | 622.71 |
| 23.88 | -25.90 | 622.71 | -34.22 | 44.14 | 622.71 | 40.04 | -46.49 | 622.71 |
| 25.82 | -28.26 | 622.71 | -33.77 | 43.42 | 622.71 | 40.18 | -46.62 | 622.71 |
| 27.55 | -30.36 | 622.71 | -33.26 | 42.61 | 622.71 | 40.30 | -46.73 | 622.71 |
| 29.09 | -32.23 | 622.71 | -32.69 | 41.70 | 622.71 | 40.41 | -46.83 | 622.71 |
| 30.46 | -33.89 | 622.71 | -32.05 | 40.68 | 622.71 | 40.52 | -46.91 | 622.71 |
| 31.68 | -35.37 | 622.71 | -31.33 | 39.53 | 622.71 | 40.63 | -46.93 | 622.71 |

## SECTION 13    Z = 627.79

| X | Y | Z | X | Y | Z | X | Y | Z |
|---|---|---|---|---|---|---|---|---|
| -36.85 | 49.73 | 627.79 | 32.37 | -37.03 | 627.79 | -30.19 | 38.48 | 627.79 |
| -36.66 | 49.76 | 627.79 | 33.32 | -38.20 | 627.79 | -29.27 | 37.04 | 627.79 |
| -36.56 | 49.72 | 627.79 | 34.18 | -39.25 | 627.79 | -28.23 | 35.43 | 627.79 |
| -36.45 | 49.64 | 627.79 | 34.94 | -40.19 | 627.79 | -27.05 | 33.61 | 627.79 |
| -36.35 | 49.54 | 627.79 | 35.61 | -41.02 | 627.79 | -25.71 | 31.59 | 627.79 |
| -36.24 | 49.41 | 627.79 | 36.21 | -41.75 | 627.79 | -24.20 | 29.32 | 627.79 |
| -36.13 | 49.26 | 627.79 | 36.75 | -42.41 | 627.79 | -22.49 | 26.78 | 627.79 |
| -36.00 | 49.09 | 627.79 | 37.23 | -43.00 | 627.79 | -20.54 | 23.94 | 627.79 |
| -35.86 | 48.90 | 627.79 | 37.65 | -43.52 | 627.79 | -18.33 | 20.77 | 627.79 |
| -35.70 | 48.69 | 627.79 | 38.03 | -43.98 | 627.79 | -15.81 | 17.22 | 627.79 |
| -35.52 | 48.46 | 627.79 | 38.36 | -44.39 | 627.79 | -12.94 | 13.27 | 627.79 |
| -35.31 | 48.19 | 627.79 | 38.66 | -44.76 | 627.79 | -9.67 | 8.86 | 627.79 |
| -35.08 | 47.90 | 627.79 | 38.93 | -45.08 | 627.79 | -5.93 | 3.96 | 627.79 |
| -34.82 | 47.56 | 627.79 | 39.17 | -45.38 | 627.79 | -1.66 | -1.49 | 627.79 |
| -34.53 | 47.19 | 627.79 | 39.38 | -45.63 | 627.79 | 2.70 | -6.88 | 627.79 |
| -34.20 | 46.77 | 627.79 | 39.57 | -45.86 | 627.79 | 6.65 | -11.63 | 627.79 |
| -33.84 | 46.30 | 627.79 | 39.73 | -46.07 | 627.79 | 10.22 | -15.81 | 627.79 |
| -33.42 | 45.77 | 627.79 | 39.88 | -46.25 | 627.79 | 13.43 | -19.49 | 627.79 |
| -32.96 | 45.17 | 627.79 | 40.02 | -46.41 | 627.79 | 16.33 | -22.74 | 627.79 |

| -32.44 | 44.50 | 627.79 | 40.14 | -46.56 | 627.79 | 18.93 | -25.62 | 627.79 |
|---|---|---|---|---|---|---|---|---|
| -31.85 | 43.75 | 627.79 | 40.24 | -46.68 | 627.79 | 21.26 | -28.15 | 627.79 |
| -31.19 | 42.90 | 627.79 | 40.33 | -46.80 | 627.79 | 23.36 | -30.40 | 627.79 |
| -30.45 | 41.95 | 627.79 | 40.41 | -46.90 | 627.79 | 25.23 | -32.38 | 627.79 |
| -29.62 | 40.88 | 627.79 | 40.45 | -47.01 | 627.79 | 26.91 | -34.14 | 627.79 |
| -28.69 | 39.69 | 627.79 | 40.44 | -47.12 | 627.79 | 28.41 | -35.69 | 627.79 |
| -27.64 | 38.34 | 627.79 | 40.35 | -47.26 | 627.79 | 29.75 | -37.07 | 627.79 |
| -26.46 | 36.83 | 627.79 | -36.93 | 49.58 | 627.79 | 30.95 | -38.30 | 627.79 |
| -25.13 | 35.13 | 627.79 | -36.92 | 49.47 | 627.79 | 32.02 | -39.38 | 627.79 |
| -23.64 | 33.22 | 627.79 | -36.90 | 49.36 | 627.79 | 32.98 | -40.35 | 627.79 |
| -21.96 | 31.07 | 627.79 | -36.84 | 49.23 | 627.79 | 33.83 | -41.20 | 627.79 |
| -20.07 | 28.66 | 627.79 | -36.77 | 49.11 | 627.79 | 34.60 | -41.96 | 627.79 |
| -17.95 | 25.96 | 627.79 | -36.68 | 48.96 | 627.79 | 35.27 | -42.63 | 627.79 |
| -15.56 | 22.92 | 627.79 | -36.58 | 48.81 | 627.79 | 35.88 | -43.23 | 627.79 |
| -12.88 | 19.51 | 627.79 | -36.47 | 48.63 | 627.79 | 36.42 | -43.76 | 627.79 |
| -9.86 | 15.69 | 627.79 | -36.35 | 48.43 | 627.79 | 36.90 | -44.24 | 627.79 |
| -6.46 | 11.39 | 627.79 | -36.21 | 48.20 | 627.79 | 37.33 | -44.66 | 627.79 |
| -2.64 | 6.56 | 627.79 | -36.06 | 47.95 | 627.79 | 37.71 | -45.03 | 627.79 |
| 1.66 | 1.15 | 627.79 | -35.88 | 47.66 | 627.79 | 38.05 | -45.36 | 627.79 |
| 5.97 | -4.25 | 627.79 | -35.69 | 47.34 | 627.79 | 38.35 | -45.66 | 627.79 |
| 9.81 | -9.05 | 627.79 | -35.47 | 46.98 | 627.79 | 38.63 | -45.92 | 627.79 |
| 13.23 | -13.32 | 627.79 | -35.22 | 46.57 | 627.79 | 38.87 | -46.15 | 627.79 |
| 16.28 | -17.12 | 627.79 | -34.95 | 46.11 | 627.79 | 39.08 | -46.36 | 627.79 |
| 18.99 | -20.50 | 627.79 | -34.63 | 45.60 | 627.79 | 39.27 | -46.55 | 627.79 |
| 21.41 | -23.50 | 627.79 | -34.28 | 45.03 | 627.79 | 39.44 | -46.71 | 627.79 |
| 23.57 | -26.17 | 627.79 | -33.88 | 44.38 | 627.79 | 39.59 | -46.86 | 627.79 |
| 25.49 | -28.55 | 627.79 | -33.44 | 43.66 | 627.79 | 39.73 | -46.99 | 627.79 |
| 27.20 | -30.66 | 627.79 | -32.93 | 42.85 | 627.79 | 39.85 | -47.10 | 627.79 |
| 28.73 | -32.54 | 627.79 | -32.37 | 41.94 | 627.79 | 39.95 | -47.21 | 627.79 |
| 30.08 | -34.21 | 627.79 | -31.73 | 40.92 | 627.79 | 40.05 | -47.29 | 627.79 |
| 31.29 | -35.70 | 627.79 | -31.00 | 39.77 | 627.79 | 40.17 | -47.32 | 627.79 |

## SECTION 14   Z = 632.87

| X | Y | Z | X | Y | Z | X | Y | Z |
|---|---|---|---|---|---|---|---|---|
| -36.54 | 49.96 | 632.87 | 31.97 | -37.36 | 632.87 | -29.88 | 38.71 | 632.87 |
| -36.35 | 49.98 | 632.87 | 32.92 | -38.55 | 632.87 | -28.96 | 37.26 | 632.87 |
| -36.24 | 49.94 | 632.87 | 33.76 | -39.60 | 632.87 | -27.92 | 35.65 | 632.87 |
| -36.14 | 49.85 | 632.87 | 34.52 | -40.54 | 632.87 | -26.75 | 33.83 | 632.87 |
| -36.04 | 49.74 | 632.87 | 35.18 | -41.38 | 632.87 | -25.42 | 31.80 | 632.87 |

| | | |
|---|---|---|
| -35.94 | 49.61 | 632.87 |
| -35.83 | 49.46 | 632.87 |
| -35.70 | 49.29 | 632.87 |
| -35.56 | 49.10 | 632.87 |
| -35.40 | 48.89 | 632.87 |
| -35.22 | 48.66 | 632.87 |
| -35.02 | 48.39 | 632.87 |
| -34.79 | 48.09 | 632.87 |
| -34.54 | 47.76 | 632.87 |
| -34.25 | 47.38 | 632.87 |
| -33.92 | 46.96 | 632.87 |
| -33.56 | 46.48 | 632.87 |
| -33.15 | 45.95 | 632.87 |
| -32.69 | 45.35 | 632.87 |
| -32.18 | 44.67 | 632.87 |
| -31.60 | 43.92 | 632.87 |
| -30.95 | 43.06 | 632.87 |
| -30.22 | 42.11 | 632.87 |
| -29.39 | 41.03 | 632.87 |
| -28.47 | 39.83 | 632.87 |
| -27.43 | 38.47 | 632.87 |
| -26.26 | 36.95 | 632.87 |
| -24.95 | 35.24 | 632.87 |
| -23.47 | 33.32 | 632.87 |
| -21.81 | 31.16 | 632.87 |
| -19.94 | 28.74 | 632.87 |
| -17.84 | 26.02 | 632.87 |
| -15.48 | 22.96 | 632.87 |
| -12.83 | 19.53 | 632.87 |
| -9.84 | 15.68 | 632.87 |
| -6.47 | 11.35 | 632.87 |
| -2.69 | 6.50 | 632.87 |
| 1.57 | 1.05 | 632.87 |
| 5.83 | -4.39 | 632.87 |
| 9.63 | -9.22 | 632.87 |
| 13.02 | -13.51 | 632.87 |
| 16.04 | -17.33 | 632.87 |
| 18.73 | -20.73 | 632.87 |
| 21.13 | -23.75 | 632.87 |
| 23.26 | -26.44 | 632.87 |

| | | |
|---|---|---|
| 35.78 | -42.12 | 632.87 |
| 36.31 | -42.78 | 632.87 |
| 36.78 | -43.37 | 632.87 |
| 37.20 | -43.90 | 632.87 |
| 37.58 | -44.36 | 632.87 |
| 37.91 | -44.78 | 632.87 |
| 38.20 | -45.15 | 632.87 |
| 38.47 | -45.47 | 632.87 |
| 38.70 | -45.77 | 632.87 |
| 38.91 | -46.02 | 632.87 |
| 39.10 | -46.26 | 632.87 |
| 39.27 | -46.46 | 632.87 |
| 39.42 | -46.64 | 632.87 |
| 39.55 | -46.81 | 632.87 |
| 39.66 | -46.95 | 632.87 |
| 39.77 | -47.08 | 632.87 |
| 39.86 | -47.20 | 632.87 |
| 39.94 | -47.30 | 632.87 |
| 39.99 | -47.41 | 632.87 |
| 39.98 | -47.51 | 632.87 |
| 39.89 | -47.65 | 632.87 |
| -36.61 | 49.80 | 632.87 |
| -36.60 | 49.70 | 632.87 |
| -36.57 | 49.58 | 632.87 |
| -36.51 | 49.46 | 632.87 |
| -36.44 | 49.33 | 632.87 |
| -36.35 | 49.19 | 632.87 |
| -36.25 | 49.03 | 632.87 |
| -36.14 | 48.86 | 632.87 |
| -36.02 | 48.65 | 632.87 |
| -35.88 | 48.43 | 632.87 |
| -35.73 | 48.17 | 632.87 |
| -35.56 | 47.89 | 632.87 |
| -35.36 | 47.57 | 632.87 |
| -35.14 | 47.20 | 632.87 |
| -34.90 | 46.80 | 632.87 |
| -34.62 | 46.34 | 632.87 |
| -34.31 | 45.83 | 632.87 |
| -33.96 | 45.26 | 632.87 |
| -33.56 | 44.61 | 632.87 |

| | | |
|---|---|---|
| -23.92 | 29.53 | 632.87 |
| -22.21 | 26.99 | 632.87 |
| -20.28 | 24.14 | 632.87 |
| -18.08 | 20.96 | 632.87 |
| -15.58 | 17.40 | 632.87 |
| -12.74 | 13.44 | 632.87 |
| -9.49 | 9.01 | 632.87 |
| -5.79 | 4.09 | 632.87 |
| -1.56 | -1.39 | 632.87 |
| 2.75 | -6.82 | 632.87 |
| 6.66 | -11.60 | 632.87 |
| 10.18 | -15.81 | 632.87 |
| 13.36 | -19.53 | 632.87 |
| 16.22 | -22.81 | 632.87 |
| 18.78 | -25.71 | 632.87 |
| 21.09 | -28.27 | 632.87 |
| 23.15 | -30.54 | 632.87 |
| 25.00 | -32.55 | 632.87 |
| 26.65 | -34.32 | 632.87 |
| 28.13 | -35.90 | 632.87 |
| 29.46 | -37.30 | 632.87 |
| 30.64 | -38.54 | 632.87 |
| 31.69 | -39.64 | 632.87 |
| 32.63 | -40.61 | 632.87 |
| 33.47 | -41.48 | 632.87 |
| 34.22 | -42.25 | 632.87 |
| 34.89 | -42.93 | 632.87 |
| 35.49 | -43.54 | 632.87 |
| 36.02 | -44.08 | 632.87 |
| 36.49 | -44.56 | 632.87 |
| 36.91 | -44.99 | 632.87 |
| 37.29 | -45.37 | 632.87 |
| 37.63 | -45.70 | 632.87 |
| 37.92 | -46.00 | 632.87 |
| 38.19 | -46.27 | 632.87 |
| 38.43 | -46.51 | 632.87 |
| 38.64 | -46.72 | 632.87 |
| 38.82 | -46.91 | 632.87 |
| 38.99 | -47.07 | 632.87 |
| 39.14 | -47.22 | 632.87 |

| 25.16 | -28.83 | 632.87 | -33.12 | 43.89 | 632.87 | 39.27 | -47.35 | 632.87 |
|---|---|---|---|---|---|---|---|---|
| 26.86 | -30.96 | 632.87 | -32.61 | 43.07 | 632.87 | 39.39 | -47.47 | 632.87 |
| 28.37 | -32.85 | 632.87 | -32.05 | 42.16 | 632.87 | 39.50 | -47.58 | 632.87 |
| 29.71 | -34.53 | 632.87 | -31.41 | 41.14 | 632.87 | 39.59 | -47.67 | 632.87 |
| 30.91 | -36.03 | 632.87 | -30.69 | 39.99 | 632.87 | 39.70 | -47.71 | 632.87 |

## SECTION 15    Z = 642.93

| X | Y | Z | X | Y | Z | X | Y | Z |
|---|---|---|---|---|---|---|---|---|
| -35.93 | 50.39 | 642.93 | 31.19 | -38.03 | 642.93 | -29.27 | 39.13 | 642.93 |
| -35.74 | 50.41 | 642.93 | 32.12 | -39.23 | 642.93 | -28.36 | 37.69 | 642.93 |
| -35.64 | 50.35 | 642.93 | 32.95 | -40.30 | 642.93 | -27.33 | 36.07 | 642.93 |
| -35.55 | 50.26 | 642.93 | 33.68 | -41.25 | 642.93 | -26.17 | 34.25 | 642.93 |
| -35.46 | 50.14 | 642.93 | 34.34 | -42.09 | 642.93 | -24.85 | 32.21 | 642.93 |
| -35.36 | 50.00 | 642.93 | 34.92 | -42.85 | 642.93 | -23.36 | 29.93 | 642.93 |
| -35.25 | 49.85 | 642.93 | 35.44 | -43.52 | 642.93 | -21.68 | 27.38 | 642.93 |
| -35.13 | 49.68 | 642.93 | 35.90 | -44.11 | 642.93 | -19.77 | 24.52 | 642.93 |
| -34.99 | 49.49 | 642.93 | 36.32 | -44.65 | 642.93 | -17.60 | 21.32 | 642.93 |
| -34.83 | 49.28 | 642.93 | 36.68 | -45.12 | 642.93 | -15.13 | 17.75 | 642.93 |
| -34.66 | 49.04 | 642.93 | 37.01 | -45.54 | 642.93 | -12.33 | 13.75 | 642.93 |
| -34.46 | 48.77 | 642.93 | 37.30 | -45.91 | 642.93 | -9.15 | 9.29 | 642.93 |
| -34.24 | 48.47 | 642.93 | 37.56 | -46.24 | 642.93 | -5.51 | 4.32 | 642.93 |
| -33.99 | 48.13 | 642.93 | 37.79 | -46.54 | 642.93 | -1.36 | -1.21 | 642.93 |
| -33.70 | 47.75 | 642.93 | 38.00 | -46.80 | 642.93 | 2.86 | -6.71 | 642.93 |
| -33.39 | 47.32 | 642.93 | 38.18 | -47.04 | 642.93 | 6.68 | -11.55 | 642.93 |
| -33.03 | 46.84 | 642.93 | 38.34 | -47.24 | 642.93 | 10.12 | -15.83 | 642.93 |
| -32.63 | 46.30 | 642.93 | 38.49 | -47.43 | 642.93 | 13.22 | -19.60 | 642.93 |
| -32.18 | 45.69 | 642.93 | 38.62 | -47.59 | 642.93 | 16.00 | -22.94 | 642.93 |
| -31.68 | 45.01 | 642.93 | 38.73 | -47.74 | 642.93 | 18.50 | -25.90 | 642.93 |
| -31.11 | 44.24 | 642.93 | 38.84 | -47.87 | 642.93 | 20.74 | -28.51 | 642.93 |
| -30.47 | 43.38 | 642.93 | 38.93 | -47.99 | 642.93 | 22.75 | -30.83 | 642.93 |
| -29.76 | 42.41 | 642.93 | 39.01 | -48.09 | 642.93 | 24.54 | -32.88 | 642.93 |
| -28.95 | 41.32 | 642.93 | 39.06 | -48.19 | 642.93 | 26.15 | -34.70 | 642.93 |
| -28.05 | 40.10 | 642.93 | 39.07 | -48.29 | 642.93 | 27.59 | -36.31 | 642.93 |
| -27.03 | 38.73 | 642.93 | 38.97 | -48.44 | 642.93 | 28.87 | -37.75 | 642.93 |
| -25.88 | 37.19 | 642.93 | -35.99 | 50.23 | 642.93 | 30.01 | -39.02 | 642.93 |
| -24.60 | 35.46 | 642.93 | -35.98 | 50.13 | 642.93 | 31.04 | -40.15 | 642.93 |
| -23.15 | 33.51 | 642.93 | -35.94 | 50.02 | 642.93 | 31.95 | -41.15 | 642.93 |
| -21.53 | 31.33 | 642.93 | -35.88 | 49.90 | 642.93 | 32.76 | -42.04 | 642.93 |
| -19.70 | 28.88 | 642.93 | -35.80 | 49.77 | 642.93 | 33.49 | -42.83 | 642.93 |

| | | |
|---|---|---|
| -17.64 | 26.12 | 642.93 |
| -15.33 | 23.03 | 642.93 |
| -12.72 | 19.55 | 642.93 |
| -9.80 | 15.66 | 642.93 |
| -6.50 | 11.28 | 642.93 |
| -2.79 | 6.37 | 642.93 |
| 1.38 | 0.85 | 642.93 |
| 5.56 | -4.65 | 642.93 |
| 9.29 | -9.54 | 642.93 |
| 12.61 | -13.89 | 642.93 |
| 15.57 | -17.75 | 642.93 |
| 18.21 | -21.19 | 642.93 |
| 20.56 | -24.25 | 642.93 |
| 22.65 | -26.97 | 642.93 |
| 24.52 | -29.39 | 642.93 |
| 26.18 | -31.54 | 642.93 |
| 27.66 | -33.46 | 642.93 |
| 28.97 | -35.16 | 642.93 |
| 30.15 | -36.68 | 642.93 |

| | | |
|---|---|---|
| -35.71 | 49.63 | 642.93 |
| -35.62 | 49.47 | 642.93 |
| -35.51 | 49.29 | 642.93 |
| -35.39 | 49.09 | 642.93 |
| -35.25 | 48.87 | 642.93 |
| -35.09 | 48.61 | 642.93 |
| -34.92 | 48.32 | 642.93 |
| -34.73 | 48.00 | 642.93 |
| -34.51 | 47.64 | 642.93 |
| -34.27 | 47.23 | 642.93 |
| -33.99 | 46.78 | 642.93 |
| -33.68 | 46.27 | 642.93 |
| -33.33 | 45.69 | 642.93 |
| -32.94 | 45.05 | 642.93 |
| -32.49 | 44.32 | 642.93 |
| -31.99 | 43.51 | 642.93 |
| -31.43 | 42.60 | 642.93 |
| -30.79 | 41.57 | 642.93 |
| -30.08 | 40.42 | 642.93 |

| | | |
|---|---|---|
| 34.14 | -43.53 | 642.93 |
| 34.71 | -44.16 | 642.93 |
| 35.23 | -44.71 | 642.93 |
| 35.69 | -45.21 | 642.93 |
| 36.09 | -45.65 | 642.93 |
| 36.46 | -46.04 | 642.93 |
| 36.78 | -46.38 | 642.93 |
| 37.07 | -46.69 | 642.93 |
| 37.33 | -46.97 | 642.93 |
| 37.56 | -47.21 | 642.93 |
| 37.76 | -47.43 | 642.93 |
| 37.94 | -47.62 | 642.93 |
| 38.11 | -47.79 | 642.93 |
| 38.25 | -47.95 | 642.93 |
| 38.38 | -48.08 | 642.93 |
| 38.49 | -48.20 | 642.93 |
| 38.59 | -48.31 | 642.93 |
| 38.68 | -48.41 | 642.93 |
| 38.78 | -48.47 | 642.93 |

## SECTION 16    Z = 648.01

| X | Y | Z |
|---|---|---|
| -35.63 | 50.61 | 648.01 |
| -35.44 | 50.62 | 648.01 |
| -35.34 | 50.55 | 648.01 |
| -35.25 | 50.46 | 648.01 |
| -35.17 | 50.34 | 648.01 |
| -35.07 | 50.20 | 648.01 |
| -34.96 | 50.05 | 648.01 |
| -34.84 | 49.88 | 648.01 |
| -34.70 | 49.69 | 648.01 |
| -34.55 | 49.47 | 648.01 |
| -34.38 | 49.23 | 648.01 |
| -34.18 | 48.96 | 648.01 |
| -33.96 | 48.66 | 648.01 |
| -33.71 | 48.32 | 648.01 |
| -33.43 | 47.93 | 648.01 |
| -33.12 | 47.50 | 648.01 |
| -32.77 | 47.02 | 648.01 |

| X | Y | Z |
|---|---|---|
| 30.80 | -38.36 | 648.01 |
| 31.72 | -39.57 | 648.01 |
| 32.53 | -40.65 | 648.01 |
| 33.26 | -41.60 | 648.01 |
| 33.91 | -42.46 | 648.01 |
| 34.49 | -43.21 | 648.01 |
| 35.00 | -43.89 | 648.01 |
| 35.46 | -44.49 | 648.01 |
| 35.87 | -45.02 | 648.01 |
| 36.23 | -45.50 | 648.01 |
| 36.55 | -45.92 | 648.01 |
| 36.84 | -46.30 | 648.01 |
| 37.10 | -46.63 | 648.01 |
| 37.33 | -46.93 | 648.01 |
| 37.53 | -47.19 | 648.01 |
| 37.71 | -47.43 | 648.01 |
| 37.87 | -47.64 | 648.01 |

| X | Y | Z |
|---|---|---|
| -28.97 | 39.35 | 648.01 |
| -28.06 | 37.90 | 648.01 |
| -27.03 | 36.28 | 648.01 |
| -25.87 | 34.46 | 648.01 |
| -24.56 | 32.42 | 648.01 |
| -23.08 | 30.13 | 648.01 |
| -21.40 | 27.57 | 648.01 |
| -19.50 | 24.71 | 648.01 |
| -17.35 | 21.50 | 648.01 |
| -14.91 | 17.92 | 648.01 |
| -12.13 | 13.91 | 648.01 |
| -8.97 | 9.43 | 648.01 |
| -5.36 | 4.44 | 648.01 |
| -1.26 | -1.13 | 648.01 |
| 2.92 | -6.65 | 648.01 |
| 6.70 | -11.53 | 648.01 |
| 10.09 | -15.84 | 648.01 |

| -32.37 | 46.47 | 648.01 |
|---|---|---|
| -31.93 | 45.86 | 648.01 |
| -31.43 | 45.18 | 648.01 |
| -30.87 | 44.40 | 648.01 |
| -30.24 | 43.54 | 648.01 |
| -29.53 | 42.56 | 648.01 |
| -28.73 | 41.47 | 648.01 |
| -27.84 | 40.24 | 648.01 |
| -26.83 | 38.86 | 648.01 |
| -25.70 | 37.31 | 648.01 |
| -24.42 | 35.57 | 648.01 |
| -22.99 | 33.61 | 648.01 |
| -21.38 | 31.41 | 648.01 |
| -19.57 | 28.95 | 648.01 |
| -17.54 | 26.18 | 648.01 |
| -15.25 | 23.06 | 648.01 |
| -12.68 | 19.57 | 648.01 |
| -9.78 | 15.65 | 648.01 |
| -6.52 | 11.24 | 648.01 |
| -2.85 | 6.30 | 648.01 |
| 1.29 | 0.75 | 648.01 |
| 5.42 | -4.78 | 648.01 |
| 9.11 | -9.70 | 648.01 |
| 12.40 | -14.07 | 648.01 |
| 15.33 | -17.96 | 648.01 |
| 17.94 | -21.42 | 648.01 |
| 20.27 | -24.50 | 648.01 |
| 22.34 | -27.24 | 648.01 |
| 24.19 | -29.67 | 648.01 |
| 25.83 | -31.84 | 648.01 |
| 27.30 | -33.76 | 648.01 |
| 28.60 | -35.48 | 648.01 |
| 29.76 | -37.01 | 648.01 |

| 38.02 | -47.82 | 648.01 |
|---|---|---|
| 38.15 | -47.99 | 648.01 |
| 38.26 | -48.14 | 648.01 |
| 38.36 | -48.27 | 648.01 |
| 38.45 | -48.38 | 648.01 |
| 38.53 | -48.49 | 648.01 |
| 38.59 | -48.59 | 648.01 |
| 38.60 | -48.69 | 648.01 |
| 38.51 | -48.83 | 648.01 |
| -35.68 | 50.45 | 648.01 |
| -35.66 | 50.34 | 648.01 |
| -35.62 | 50.23 | 648.01 |
| -35.55 | 50.12 | 648.01 |
| -35.48 | 49.99 | 648.01 |
| -35.39 | 49.85 | 648.01 |
| -35.30 | 49.69 | 648.01 |
| -35.19 | 49.51 | 648.01 |
| -35.06 | 49.31 | 648.01 |
| -34.93 | 49.08 | 648.01 |
| -34.77 | 48.83 | 648.01 |
| -34.60 | 48.54 | 648.01 |
| -34.41 | 48.22 | 648.01 |
| -34.19 | 47.86 | 648.01 |
| -33.95 | 47.45 | 648.01 |
| -33.67 | 47.00 | 648.01 |
| -33.36 | 46.48 | 648.01 |
| -33.01 | 45.91 | 648.01 |
| -32.62 | 45.26 | 648.01 |
| -32.18 | 44.54 | 648.01 |
| -31.68 | 43.72 | 648.01 |
| -31.12 | 42.81 | 648.01 |
| -30.48 | 41.79 | 648.01 |
| -29.77 | 40.64 | 648.01 |

| 13.15 | -19.65 | 648.01 |
|---|---|---|
| 15.90 | -23.01 | 648.01 |
| 18.36 | -26.00 | 648.01 |
| 20.57 | -28.64 | 648.01 |
| 22.55 | -30.98 | 648.01 |
| 24.32 | -33.05 | 648.01 |
| 25.90 | -34.89 | 648.01 |
| 27.31 | -36.53 | 648.01 |
| 28.57 | -37.98 | 648.01 |
| 29.70 | -39.26 | 648.01 |
| 30.71 | -40.41 | 648.01 |
| 31.61 | -41.42 | 648.01 |
| 32.41 | -42.32 | 648.01 |
| 33.12 | -43.13 | 648.01 |
| 33.76 | -43.84 | 648.01 |
| 34.32 | -44.47 | 648.01 |
| 34.83 | -45.04 | 648.01 |
| 35.28 | -45.54 | 648.01 |
| 35.68 | -45.98 | 648.01 |
| 36.04 | -46.38 | 648.01 |
| 36.36 | -46.73 | 648.01 |
| 36.64 | -47.04 | 648.01 |
| 36.90 | -47.32 | 648.01 |
| 37.12 | -47.57 | 648.01 |
| 37.32 | -47.79 | 648.01 |
| 37.50 | -47.98 | 648.01 |
| 37.66 | -48.16 | 648.01 |
| 37.80 | -48.31 | 648.01 |
| 37.93 | -48.45 | 648.01 |
| 38.04 | -48.57 | 648.01 |
| 38.14 | -48.68 | 648.01 |
| 38.23 | -48.78 | 648.01 |
| 38.32 | -48.85 | 648.01 |

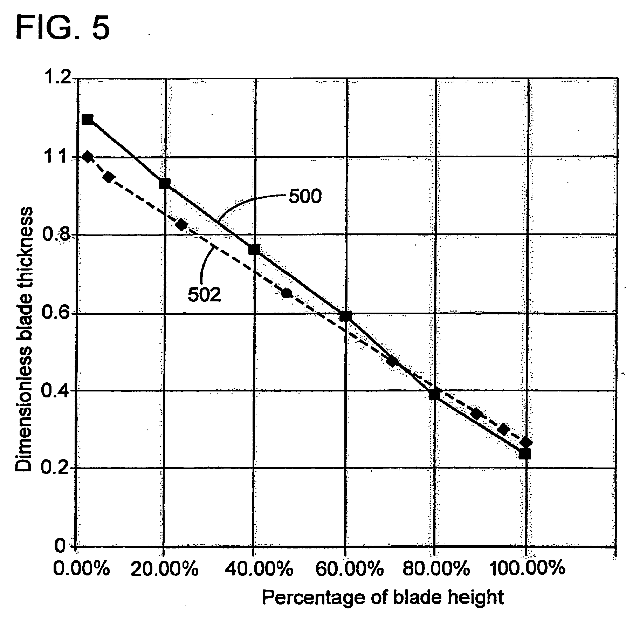

According to exemplary embodiments, by manufacturing a rotor blade 102 in accordance with the Table 1 of points set forth above, the thickness of the rotor blade 102 changes continuously along the blade height in order to, for example, move a resonance frequency associated with movement of the rotor blade 102 to, for example, improve a design margin associated with fatigue. This change in thickness can be seen, for example, in the plot of Figure 5. Therein, in a first region closest to the rotor blade's platform 200, starting from about 2.21% of the blade height (i.e., just above the blade fillet radius) up to about 60% of the blade height, the maximum thickness of the rotor blade 102 according to this exemplary embodiment can be described by the following linear function:

$$Tmax = -0.8646*h + 1.1087 \textit{ (where h is blade height percentage)}$$

In the subsequent region, ranging from 60% to 80% of the rotor blade height, the maximum thickness of the rotor blade 102 varies according to the following linear function:

$$Tmax = -1.0209*h + 1.2058 \textit{ (where h is blade height percentage)}$$

In the subsequent region, ranging from 80% to 100% of blade height (i.e., to free end of the blade), the maximum thickness of the rotor blade 102 varies according to the following linear function:

$$Tmax = -0.7618*h + 0.9985 \text{ (where h is blade height percentage)}$$

Thus, it can be seen in the plot of Figure 5, wherein function 500 depicts rotor blade thickness as a function of blade height for an exemplary embodiment, and function 502 depicts the same quantity for a baseline design, that exemplary embodiments provide for a thicker rotor blade through about the first 75% of the blade height (where the functions cross) and then for a thinner rotor blade relative to the baseline design. It will be appreciated that, however, these exemplary functions illustrative and that some variance in the points set forth in Table 1 are to be expected as will be described below.

It will be appreciated by those skilled in the art that Table 1 provides sufficient data to completely define the shape of an airfoil 204 according to exemplary embodiments. For example, by defining X and Y coordinate values at selected locations in a Z direction normal to the X, Y plane, the profile section of the rotor blade airfoil 204 at each Z distance along the length of the airfoil can be ascertained. By connecting the X and Y values with smooth continuing arcs, each profile section of the airfoil 204 at each distance Z can be fixed. The airfoil profiles of the various surface locations between the distances Z are determined by smoothly connecting the adjacent profile sections to one another, thus forming the airfoil 204's profile. The values set forth above in Table 1 represent the airfoil profiles according to exemplary embodiments at ambient, non-operating or non-hot conditions and are for an uncoated airfoil.

The table values provided in Table 1 are generated and shown to two decimal places for determining the profile of the airfoil 204. There are typical manufacturing tolerances as well as coatings, which should be accounted for in the actual profile of the airfoil. Accordingly, it will be appreciated by those skilled in the art that the values for the profile given in Table 1 are for a nominal airfoil 204. It will therefore be appreciated that the actual values encompassed by these exemplary embodiments are not limited to the precise values shown in Table 1, but are instead intended to include a range of values around those specified in the table.

For example, the values encompassed should be plus or minus typical manufacturing tolerances, and/or plus or minus any coating thicknesses used on the airfoil 204. Therefore, a distance of about +/- 1.0mm in a direction normal to any surface location along the airfoil profile defines an airfoil profile envelope for a rotor blade airfoil design and compressor according to these exemplary embodiments. In other words, a distance of about +/- 1.0mm, and preferably about +/- 0.5 mm, in a direction normal to any surface location along the airfoil profile defines a range of variation between measured points on the actual airfoil surface at nominal cold or room temperature and the ideal position of those points, at the same temperature, according to exemplary embodiments.

Moreover it will be appreciated by those skilled in the art that the shape of the airfoils 204 according to these exemplary embodiments will also vary from their cold or room temperature manufactured shape, to their heated shape when placed into operation in a gas turbine engine. As the airfoils 204 heat up in service, stress and temperature will cause a change in the X, Y, Z values of the cold or room temperature points depicted in Table 1. Thus exemplary embodiments further contemplate the inclusion of variances associated with heating of the airfoils 204 during normal operation.

The airfoil, as embodied by the exemplary embodiments, can find application as a first stage rotor shape. The coordinate values for the X, Y and Z coordinates are set forth in millimeters, although other units of dimensions may be used when the values are appropriately converted. These values exclude fillet regions of the platform.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

**Claims**

1. A rotor blade (102) comprising:

   a platform (200);
   a root portion (206) of said rotor blade connected to said platform (200); and
   a blade surface ending in a tip portion (208), said blade surface having a cross-sectional airfoil shape,
   wherein a thickness of said rotor blade varies as a function of rotor blade height in accordance with three different linear functions,
   wherein a maximum thickness of said rotor blade (102) starting from about 2.21% of a blade height up to about 60% of rotor blade height, is described by a first one of said three linear functions as:

$$Tmax = -0.8646*h + 1.1087,$$

where h is blade height percentage;
wherein said maximum thickness of said rotor blade (102) in a first subsequent region, ranging from about 60% to about 80% of the rotor blade height is described by a second one of said three linear functions as:

$$Tmax = -1.0209*h + 1.2058,$$

wherein h is blade height percentage; and
wherein said maximum thickness of said rotor blade (102) in a second subsequent region, ranging from 80% to 100% of the rotor blade height is described by a third one of said three linear functions as:

$$Tmax = -0.7618*h + 0.9985,$$

where h is blade height percentage.

2. The rotor blade of claim 1, wherein said rotor blade (102) has a nominal surface profile in accordance with Cartesian coordinates X, Y and Z as set forth in TABLE 1, and wherein X and Y are distances in millimeters which, when connected by smooth, continuing arcs, define airfoil profile sections at each distance Z in millimeters, the airfoil profile sections at the Z distances being joined smoothly with one another to form a complete airfoil shape.

3. A turbo machine comprising:

a drive shaft (110);
at least one rotor wheel (104);
a plurality of circumferentially spaced rotor blades (102) mounted on said rotor

wheel;

a stator; and
a plurality of circumferentially spaced stator blades (106) attached to said stator wherein at least one of said plurality of rotor blades and plurality of stator

blades is in accordance with any one of the preceding claims.


**Patentansprüche**

1. Rotorschaufel (102), umfassend:

eine Plattform (200);
einen Fußabschnitt (206) der Rotorschaufel, der mit der Plattform (200) verbunden ist; und
eine Schaufeloberfläche., die in einem Spitzenabschnitt (208) endet, wobei die Schaufeloberfläche eine aerodynamische Querschnittsprofilform aufweist,
wobei eine Dicke der Rotorschaufel in Abhängigkeit der Rotorschaufelhöhe in Übereinstimmung mit drei verschiedenen linearen Funktionen variiert,
wobei eine maximale Dicke der Rotorschaufel (102), die von etwa 2,21 % einer Schaufelhöhe bis zu etwa 60 % der Rotorschaufelhöhe beträgt, durch eine erste der drei linearen Funktionen wie folgt beschrieben wird:

$$Tmax = -0,8646*h + 1,1087,$$

wobei h die prozentuale Schaufelhöhe ist;
wobei die maximale Dicke der Rotorschaufel (102) in einem ersten aufeinanderfolgenden Bereich, der im Bereich von etwa 60 % bis etwa 80 % der Rotorschaufelhöhe liegt, durch eine zweite der drei linearen Funktionen wie folgt beschrieben wird:

$$Tmax = -1{,}0209*h + 1{,}2058,$$

wobei h die prozentuale Schaufelhöle ist; und
wobei die maximale Dicke der Rotorschaufel (102) in einem zweiten aufeinanderfolgenden Bereich, der im Bereich von etwa 80 % bis 100 % der Rotorschaufelhöhe liegt, durch eine dritte der drei linearen Funktionen wie folgt beschrieben wird:

$$Tmax = -0{,}7618*h + 0{,}9985,$$

wobei h die prozentuale Schaufelhöle ist.

2. Rotorschaufel nach Anspruch 1, wobei die Rotorschaufel (102) ein aerodynamisches Nennoberflächenprofil gemäß kartesischen Koordinaten X, Y und Z wie in Tabelle 1 angegeben aufweist und wobei X und Y Abstände in Millimetern sind, die, wenn sie durch ebenmäßige, fortlaufende Bögen verbunden sind, aerodynamische Profilabschnitte um jeden Abstand Z in Millimetern definieren, wobei die aerodynamischen Profilabschnitte bei den Z-Abständen ebenmäßig miteinander verbunden sind, um eine vollständige aerodynamische Profilform zu bilden.

3. Turbomaschine, umfassend:

eine Antriebswelle (110);
mindestens ein Rotorrad (104);
mehrere entlang des Umfangs beabstandete Rotorschaufeln (102), die an dem Rotorrad befestigt sind;
einen Stator; und
mehrere entlang des Umfangs beabstandete Statorschaufeln (106), die an dem Stator befestigt sind
wobei mindestens eine der mehreren Rotorschaufeln und mehreren Statorschaufeln nach einem der vorhergehenden Ansprüche ist.

**Revendications**

1. Pale de rotor (102) comprenant :

une plateforme (200) ;
une partie d'emplanture (206) de ladite pale de rotor raccordée à ladite plateforme (200) ; et
une surface de pale se terminant par une partie de pointe (208), ladite surface de pale ayant une forme de profil aérodynamique en coupe transversale,
dans laquelle l'épaisseur de ladite pale de rotor varie en fonction de la hauteur de la pale de rotor conformément à trois fonctions linéaires différentes,
dans laquelle l'épaisseur maximale de ladite pale de rotor (102) partant d'environ 2,21 % de la hauteur d'une pale jusqu'à environ 60 % de la hauteur d'une pale de rotor est décrite par une première desdites trois fonctions linéaires .

$$Tmax = -0{,}8646*h + 1{,}1087,$$

où h est le pourcentage en hauteur de la pale:
dans laquelle ladite épaisseur maximale de ladite pale de rotor (102) dans une première région ultérieure qui se situe dans une plage d'environ 60 % à environ 80 % de la hauteur d'une pale de rotor est décrite par une deuxième desdites trois fonctions linéaires .

$$Tmax = -1,0209*h + 1,2058,$$

où h est le pourcentage en hauteur de la pale; et
dans laquelle ladite épaisseur maximale de ladite pale de rotor (102) dans une seconde région ultérieure qui se situe dans une plage de 80 % à 100 % de la hauteur d'une pale de rotor est décrite par une troisième desdites trois fonctions linéaires .

$$Tmax = -0,7618*h + 0,9985,$$

où h est le pourcentage en hauteur de la pale.

2. Pale de rotor selon la revendication 1, dans laquelle ladite pale de rotor (102) a un profil de surface nominal conformément aux coordonnées cartésiennes X, Y et Z telles que mentionnées dans le tableau 1 et dans laquelle X et Y sont des distances en millimètres qui, lorsqu'elles sont raccordées par des arcs continus uniformes, définissent des sections de profil aérodynamique à chaque distance Z en millimètres, les sections de profil aérodynamique aux distances Z étant jointes uniformément l'une à l'autre pour présenter une forme de profil aérodynamique complète.

3. Turbomachine comprenant :

   un arbre d'entraînement (110) ;
   au moins une roue de rotor (104) ;
   une pluralité de pales de rotor espacées circonférentiellement (102) montées sur ladite roue de rotor ;
   un stator ; et
   une pluralité d'aubes de stator espacées circonférentiellement (106) fixées audit stator,
   dans laquelle au moins l'une de ladite pluralité de pales de rotor et de ladite pluralité d'aubes de stator est en conformité avec l'une quelconque des revendications précédentes.

FIG. 1

# FIG. 2

Section 16

208

102

112

204

LE

TE

Section 1

206

200

202

# FIG. 3

# FIG. 4

# FIG. 5

**EP 2 423 436 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090290987 A1